# EUROPÄISCHE PATENTSCHRIFT

(11) **EP 1 726 863 B1**
(45) Veröffentlichungstag und Bekanntmachung des Hinweises auf die Patenterteilung: **03.03.2010**
(21) Anmeldenummer: 06009387.9
(22) Anmeldetag: 06.05.2006
(51) Int. Cl.: F16L 25/00, F16L 47/24, F16L 37/113, F16L 21/08

(54) **Vorrichtung zum Einrichten eines Übergangs zwischen einer metallischen Armatur und einem Kunststoffrohr**
Device for establishing a connection between a metal fitting and a plastic pipe
Dispositif pour établir un raccord entre un embout métallique et un tuyau en plastique

(30) Priorität: 25.05.2005 DE 102005024590; 25.05.2005 DE 202005008404 U; 06.07.2005 DE 102005031827; 28.11.2005 DE 102005056787; 14.02.2006 DE 102006006956
(43) Veröffentlichungstag der Anmeldung: 29.11.2006
(73) Patentinhaber: Erhard GmbH & Co. KG, 89522 Heidenheim (DE)
(72) Erfinder: Hintzen, Werner, 50765 Köln (DE)
(74) Vertreter: Mentzel, Norbert

(56) Entgegenhaltungen:
- EP-A- 0 166 203
- EP-A- 0 535 247
- DE-B3- 10 328 601
- DE-U1- 20 120 145
- GB-A- 1 258 319
- US-A- 3 764 170

## Beschreibung

Die Erfindung bezieht sich auf eine Vorrichtung zum Einrichten eines Übergangs zwischen einem ersten Rohr, welches oft zu einer metallischen Armatur gehört und einem zweiten Rohr, welches zumeist aus Kunststoff besteht, der im Oberbegriff des Anspruchs 1 genannten Art. Derartige Vorrichtungen sind, zum Beispiel, aus der Druckschrift DE-U-201 20 145 bekannt und finden insbesondere Verwendung bei Versorgungsleitungen für Gas, Wasser und Abwasser. Hier muss ein solcher Übergang geschaffen werden, beispielsweise von einem Absperrschieber, einem Ventil, einem Metallrohr, einem Formteil oder dergleichen zur Versorgungsleitung hin.

Derartige Übergänge werden bisher häufig dadurch geschaffen, dass der erste, metallische Stutzen auf seiner Außenseite über Verzahnungen oder ähnliches verfügt auf die ein kurzer Kunststoffstutzen aufgepresst wird. Diese Verbindungsstelle wird dann mit einem Schrumpfschlauch gesichert. An den Kunststoffstutzen wird dann mittels einer Schweißmuffe oder eines Stumpfschweißverfahrens das zweite, aus Kunststoff bestehende Rohr angebracht. Diese Methode weist jedoch einige Nachteile auf. Gehört das Kunststoffrohr beispielsweise zu einer Hausanschlussleitung, so weist es meistens unterschiedliche Eigenschaften auf, wie verschiedene Farben, beispielsweise blau, gelb oder schwarz, für die verschiedenen Medien und unterschiedliche Wandstärken bei gleicher Nennweite. Daher müssen identische Armaturen mit Kunststoffstutzen in unterschiedlichen Farben und Wandstärken auf Vorrat gehalten werden, da der Kunststoffstutzen die gleichen Abmessungen und die gleiche Farbe wie das Kunststoffrohr, mit dem er verbunden werden soll, aufweisen muss, was einen erhöhten Lageraufwand bedeutet. Wird der Anschluss zum Kunststoffrohr mittels einer Schweißmuffe hergestellt, und ist die so entstandene Schweißnaht undicht, muss der Bereich des Kunststoffstutzens an dem sich die Muffe befindet entfernt werden. Dann wird eine neue Schweißmuffe aufgesetzt und der Schweißvorgang erneut durchgeführt. Dies kann jedoch nicht beliebig oft, sondern häufig nur zweimal wiederholt werden, da der Kunststoffstutzen nicht zu lang ausgeführt werden darf um die Handhabung beispielsweise in einem Baustellengraben nicht unnötig zu erschweren. Ist die Schweißnaht dann wieder undicht, so muss die gesamte Armatur ausgetauscht werden.

Bei einer anderen Vorrichtung verfügt der Stutzen auf seiner Innenseite über ein Gewinde, in welches ein Kunststoffstutzen geschraubt und dann gesichert wird. Hier ergeben sich jedoch die gleichen Nachteile bezüglich Vorratshaltung und Anzahl der Verschweißungsversuche wie bei der zuvor erwähnten Vorrichtung.

Aufgabe der Erfindung ist es daher, eine Vorrichtung der im Oberbegriff des Anspruches 1 genannten Art zu entwickeln, die unabhängig von der Farbe und der Wandstärke des zweiten Rohres verwendet werden kann, die leicht zu handhaben ist und bei der alle mit dem zweiten Rohr direkt in Verbindung bringbaren Elemente schnell und einfach montiert, durch einfache Möglichkeiten ausgetauscht und gegen Verdrehen gesichert werden können. Dies wird erfindungsgemäß durch die im Anspruch 1 genannten Maßnahmen erreicht, denen folgende besondere Bedeutung zukommt.

Nach der Erfindung ist die Kunststoffmuffe so im Inneren eines Metallstutzens anbringbar, dass sie mit ihrem Außenende herausragt. Gleichzeitig verfügt sie im Umfangs- und/oder Stirnbereich über wenigstens ein Dichtungsmittel. Weiterhin verfügt die Vorrichtung über eine dreiteilige Halteeinrichtung, welche einen Anschlag am Metallstutzen, eine Schulter an der Kunststoffmuffe und einen Klemmring umfasst. Der Klemmring weist hierbei einen Gegenanschlag für den Anschlag und eine Gegenschulter für die Schulter auf, welche jeweils miteinander in Eingriff bringbar sind. Hierdurch entsteht ein Einbauzustand. Die Kunststoffmuffe kann nun im Einbauzustand mit einem Kunststoffrohr verschweißt werden, wobei zwischen diesem Kunststoffrohr und der metallischen Armatur eine dichte und lösbare Verbindung entsteht. Die Abdichtung der Kunststoffmuffe zum Metallstutzen hin entsteht durch das Dichtmittel in Verbindung mit der dreiteiligen Halteeinrichtung. Diese Einrichtung bewirkt, dass das Dichtmittel an dem Metallstutzen verpresst wird, und so die Abdichtung entsteht. Da die Kunststoffmuffe größtenteils im Inneren des Metallstutzens angeordnet ist, ist die gesamte Vorrichtung von der Farbe des verwendeten Kunststoffrohres unabhängig. Es kann somit für jede beliebige Farbe des Kunststoffrohres die gleiche Vorrichtung verwendet werden, was eine enorme Reduktion des Platzbedarfs für die Vorratshaltung bedeutet. Auch wird der Materialaufwand für den bisher benötigten Kunststoffstutzen eingespart.

In einer nicht erfindungsgemäßen Ausgestaltung der Vorrichtung weist der Stutzen eine Schrägfläche sowie einen Anschlag auf und die Muffe besitzt eine Schulter und wenigstens ein Dichtmittel. Dem Stutzen und der Muffe ist ein Stützring zugeordnet, welcher über eine Gegenschulter für die Schulter und zumindest ein Verriegelungselement verfügt. Das Verriegelungselement weist mindestens je eine Gleitfläche, eine Anlagefläche und eine Sicherungsfläche auf. Im Montagefall des Stutzens, der Muffe und des Stützrings steht die Gegenschulter mit der Schulter in Eingriff. Ferner kommt der Stützring mit seiner Anlagefläche an der Schrägfläche des Stutzens zur Anlage während die Sicherungsfläche des Verriegelungselements den Anschlag des Stutzens hintergreift. Im Montagefall sind der Stützring und die Muffe so vor unerwünschtem Verdrehen oder Verschieben gesichert. Der Stützring ist dabei einfach zu montieren. Das Dichtmittel der Muffe wird im Montagefall im Inneren des Stutzens verpresst, wodurch die Abdichtung zwischen Stutzen und Muffe stattfindet. Da die Muffe größtenteils im Inneren des Stutzens angeordnet ist, kann sie auch für verschiedenste Ausgestaltungen des zweiten Rohres verwendet werden. Eine Abhängigkeit von der Farbe, der Wandstärke oder ähnlichem des zweiten Rohres ist somit nicht gegeben, wodurch die Lagerhaltung erheblich vereinfacht wird. Des Weiteren wird das Material für den bisher benötigten Kunststoffstutzen eingespart.

Außerdem können alle mit dem Kunststoff- bzw. zweiten Rohr unmittelbar in Verbindung stehenden Elemente einfach ausgetauscht werden. Hierzu müssen nur die Halteeinrichtung bzw. der Stützring gelöst werden und die Muffe ist aus dem Stutzen entnehmbar. Dies ist beispielsweise dann vorteilhaft, wenn die Schweißnaht zwischen der Muffe und dem Kunststoff- bzw. zweiten Rohr fehlerhaft ist, beispielsweise weil das Rohr nicht sorgfältig genug für den Verschweißungsvorgang vorbereitet wurde. Auch wenn mehrere Verschweißungen fehlerhaft verlaufen sollten, so können immer wieder die entsprechenden Muffen ausgetauscht werden, ohne die gesamte metallische Armatur bzw. das erste Rohr auswechseln zu müssen.

Durch die Anordnung der Muffe im Stutzen verkürzt sich auch die Baulänge des ersten Rohres bzw. der metallischen Armatur, was eine einfachere Handhabung, insbesondere auch in räumlich sehr begrenzten Baustellengruben zum Vorteil hat.

In einer besonders bevorzugten Ausführungsform des ersten Ausführungsbeispiels wird die dreiteilige Halteeinrichtung innerhalb des Metallstutzens vorgesehen. Hierdurch werden die Herstellungskosten für die gesamte Vorrichtung deutlich verringert, insbesondere der Klemmring ist sehr kostengünstig herstellbar.

Erfindungsgemäß ist es die Halteeinrichtung so vorzusehen, dass bei Zugbelastung der Kunststoffmuffe in Auszugsrichtung keine Biegemomente durch die Haltereinrichtung auf die Kunststoffmuffe übertragen werden, um diese nicht durch eventuelle Biegemomente zu beschädigen oder gar zu zerstören. Dies wird erreicht, indem man die Schulter an der Stirnseite des Außenendes der Kunststoffmuffe anordnet, wodurch bei Zugbelastung der Kunststoffmuffe keine Biegemomente von der Schulter auf die Kunststoffmuffe übertragen werden können.

In einer Ausführungsform der erwähnten, nicht erfindungsgemäßen Ausgestaltung der Vorrichtung ist das Verriegelungselement als etwa L-förmiger Nocken ausgebildet. Die Schrägfläche kann dann an einem Gegennocken gebildet werden. Diese Bauweise ist besonders einfach und vorteilhaft, da der Nocken auf einfache Weise bei der Montage durch Gleiten in den Sicherungszustand überführbar ist. Eine Neigung der Schrägfläche von 5° gegenüber der senkrecht auf die Mittelachse des Stutzens stehenden Fläche hat sich hier als günstig erwiesen, da dann die Steigung nicht zu groß ist, die Muffe aber trotzdem noch beim Drehen in den Stutzen hineingepresst wird.

Empfehlenswerterweise geschieht die Montage des Stützrings nach Art eines Bajonettverschlusses. Hierbei wird der Stützring zunächst über die Schulter an der Muffe und die Schrägfläche am Stutzen geschoben. Dann wird der Stützring verdreht, wobei er mit der Gleitfläche des Verriegelungselements über die Schrägfläche am Stutzen gleitet. Durch diese Schrägfläche werden der Stützring und die Muffe weiter in Richtung des ersten Rohres geschoben. Die Muffe wird dabei in den Stutzen gepresst. Die Dichtmittel der Muffe bewirken beim Verpressen eine Abdichtung zwischen der Muffe und dem Stutzen. Wenn der Stützring so weit gedreht wird, bis er mit seiner Gleitfläche das Ende der Schrägfläche erreicht, so rastet er ein, indem er mit der Sicherungsfläche des Verriegelungselements den Anschlag am Stutzen hintergreift. Der Stützring ist nun gegen Verdrehen gesichert und die Muffe ist fest im Stutzen verpresst.

In einem weiteren Beispiel ist es auch möglich, das zweite Rohr durch Verklemmen in der Muffe zu haltern. Hierdurch können auch zweite Rohre, die nicht aus verschweißbarem Kunststoff bestehen durch die Vorrichtung verbunden werden. Ein Verklemmen ist natürlich auch bei Kunststoffrohren möglich.

Das erste und / oder das zweite Rohr können beispielsweise zu einer Armatur oder einem Formstück gehören.

Eine Möglichkeit der Verbindung zwischen dem Rohr und der Muffe ergibt sich durch eine weitere bevorzugte Ausführungsform der Erfindung. Am Innenumfang der Kunststoffmuffe sind Heizdrähte vorgesehen. Das eine Ende des Kunststoffrohres wird dann in die Kunststoffmuffe, zumindest im Bereich der Heizdrähte, eingeführt, wonach ein Erhitzen der Heizdrähte und ein Verschweißen der Kunststoffmuffe mit dem Kunststoffrohr erfolgt, wie es bei Elektroschweißmuffen üblich ist. Durch dieses Erhitzen erfolgt dann die Verschweißung der Kunststoffmuffe mit dem Kunststoffrohr. Dies hat den Vorteil, dass unabhängig von der Wandstärke des Kunststoffrohres nur jeweils eine metallische Armatur vorgesehen werden muss, da die Außendurchmesser einer einzelnen Nennweite auch bei verschiedenen Wandstärken konstant sind.

Bevorzugterweise sind die Heizdrähte bifilar angeordnet, wodurch die elektrischen Anschlüsse auf einer Seite - idealerweise am äußeren Ende - der Kunststoffmuffe anordnenbar sind und nicht von dem Stutzen überdeckt werden. Dies ermöglicht einen besonders einfachen Zugriff auf die Heizdrähte und Anschluss dieser an eine Spannungsquelle, was den Verschweißvorgang erleichtert. Durch dieses Verfahren wird eine sichere und gute Verschweißung des Kunststoffrohres mit der Kunststoffmuffe bewirkt.

Empfehlenswerterweise verfügt die Muffe noch über einen Indikator, der anzeigt, wann eine ausreichende Hitzeentwicklung im Bereich der Heizdrähte stattgefunden hat, um eine gute Verschweißung zwischen der Muffe und dem Kunststoffrohr zu ermöglichen. Hierdurch wird eine ausreichende Verschweißung sichergestellt, andererseits aber auch verhindert, dass der Verschweißvorgang zu lange betrieben wird.

Alternativ kann das Kunststoffrohr bzw. auch mittels Stumpfschweißen an der Kunststoffmuffe angebracht werden. Hierbei wird am Außenende der Kunststoffmuffe das Kunststoffrohr angeschweißt. Dies ist besonders bei größeren Nennweiten üblich. In diesem Fall benötigt man zwar für jede Wandstärke einer Nennweite eine eigene metallische Armatur; jedoch erübrigt sich für diesen Fall die Anbringung der Heizdrähte und der elektrischen Anschlüsse in der Muffe.

Um eine einfache Montage der Kunststoffmuffe im Metallstutzen zu ermöglichen, kann der Klemm- bzw. Stützring so ausgebildet sein, dass durch sein Verdrehen die Muffe in den Stutzen hineingedrückt wird. Um dies zu realisieren, ist besonders die Ausbildung der Vorrichtung nach Art eines Bajonettverschlusses geeignet, bei der der Anschlag und / oder die Schulter von dem Ring hintergriffen wird. Wird der Klemm- bzw. Stützring dann in dieser Position gesichert, so entsteht eine dichte aber lösbare Verbindung zwischen der Muffe und dem Stutzen.

In einem Ausführungsbeispiel wird das bzw. die Dichtmittel der Muffe durch das Eindrehen des Klemm- bzw. Stützrings am Stutzen verpresst. Hierdurch kann ein höherer Anpressdruck erzeugt werden, der eine sichere und dichte Verbindung zwischen der Muffe und dem Stutzen schafft.

Günstigerweise verfügt der Klemm- bzw. Stützring auch noch über ein oder mehrere Sicherungselemente, welche ihn vor ungewollten Verschiebungen und/oder Verdrehungen schützt und darüber hinaus auch noch Verschmutzungen der Halteeinrichtungen vorbeugt. Letzteres ist insbesondere wichtig, da es häufig vorkommt, dass die Armaturen und Rohre unterirdisch verlegt werden.

Es existieren verschiedene vorteilhafte Ausführungen des bzw. der Sicherungselemente, beispielsweise in Form von Nieten, Sicherungsstiften, Schraubverbindungen oder auch in Form eines Kunststoffsteges. Der Kunststoffsteg ist dann im Stirnbereich des Stutzens anbringbar und tritt mit dem Klemm- bzw. Stützring in Wirkverbindung.

In einem besonders bevorzugten Ausführungsbeispiel dient als Sicherungselement ein Kunststoff, Kunstharz, Wachs oder ähnliches, welches im Stirnbereich des Stutzens anspritzbar ist. Dieses Material verschließt sehr effektiv alle eventuell vorhandenen Öffnungen im Stirnbereich der Muffe und des Stutzens und kann so besonders gut die gesamte Vorrichtung vor Verschmutzungen schützen, insbesondere, wenn die Vorrichtung im Erdreich verlegt wird, was häufig vorkommt. Darüber hinaus ist ein solches Material einfach und kostengünstig anzubringen und passt sich jeglichen Größenverhältnissen an. Es müssen somit auch nicht verschiedene Sicherungselemente für verschiedene Größen der Halteeinrichtung auf Vorrat gehalten werden. Welche Art des Sicherungselementes gewählt wird, hängt von den jeweils vorliegenden Größenverhältnissen, Materialien und sonstigen Gegebenheiten ab.

Günstigerweise besteht die Kunststoffmuffe und / oder das bzw. die Kunststoffrohre aus Polyethylen. Dieses Material ist sowohl schweißbar als auch grundwasserneutral und recyclebar und kostengünstig in der Herstellung.

Die metallische Armatur und / oder der Metallstutzen sollten empfehlenswerterweise aus Guss, wie beispielsweise Grauguss, Stahlguss, duktilem Guss od.dgl. bestehen. Hier ergibt sich der Vorteil, dass auch die teilweise komplexen Formen auf recht kostengünstige Art hergestellt werden können. Darüber hinaus ist das Material sehr beständig.

Als Armatur können verschiedene Einrichtungen dienen, beispielsweise ein Absperrschieber, ein Ventil oder auch ein Metallrohr. Das Rohr kann aber auch zu einem Formstück gehören. Es sind auch noch weitere Einrichtungen denkbar.

Weitere Vorzüge und Ausführungsbeispiele der Erfindung ergeben sich aus der nachfolgenden Beschreibung, den Unteransprüchen und den Zeichnungen. Es zeigen:
- Fig. 1:: eine nicht erfindungsgemäße Vorrichtung in einer ersten Ausführungsform der ersten Ausgestaltung mit einem Absperrschieber
- Fig. 2:: eine nicht erfindungsgemäße Vorrichtung in einer zweiten Ausführungsform der ersten Ausgestaltung als Explosionszeichnung im Schnitt,
- Fig. 3:: die Vorrichtung aus Fig. 2 im Zusammenbau im Schnitt,
- Fig.4:: die Vorrichtung gemäß Fig. 2 und 3 im Zusammenbau perspektivisch,
- Fig. 5:: eine Ansicht der Halteeinrichtung des Ausführungsbeispiels von Fig. 2 bis 4 vor Herbeiführung des Einbauzustandes,
- Fig. 6:: die Halteeinrichtung aus Fig. 5 während der Herbeiführung des Einbauzustandes,
- Fig. 7:: die Halteeinrichtung gemäß Fig. 5 und 6 im Einbauzustand
- Fig. 8:: einen Metallstutzen gemäß einer erfindungsgemäßen Ausführungsform der ersten Ausgestaltung im Schnitt,
- Fig. 9:: eine erfindungsgemäße Kunststoffmuffe gemäß der Ausführung in Fig. 8 im Schnitt,
- Fig. 10:: einen erfindungsgemäßen Klemmring gemäß der Ausführung von Fig. 8 und 9 im Schnitt,
- Fig. 11:: die Kunststoffmuffe, den Metallstutzen und den Klemmring aus Fig. 8 bis 10 im Zusammenbau im Schnitt
- Fig. 12:: eine weitere erfindungsgemäße Ausführungsform der ersten Ausgestaltung im Zusammenbau im Schnitt
- Fig. 13:: die Ausführungsform von Fig. 12, perspektivisch

- Fig. 14:: eine nicht erfindungsgemäße Vorrichtung gemäß der zweiten Ausgestaltung mit zwei Stutzen und zwei Muffen, wobei eine Muffe in Ansicht und eine im Aufriss dargestellt ist
- Fig. 15:: die Ausführungsform eines Stützrings gemäß Fig. 14 in perspektivischer Darstellung
- Fig. 16:: eine Ausführungsform eines Stutzens gemäß Fig. 14 in Draufsicht
- Fig. 17:: eine Ausführungsform einer Muffe gemäß Fig. 14 mit Heizdrähten in Draufsicht
- Fig. 18:: eine Muffe gemäß Fig. 17 in perspektivischer Darstellung
- Fig. 19:: eine Detailansicht gemäß VI in Fig. 14

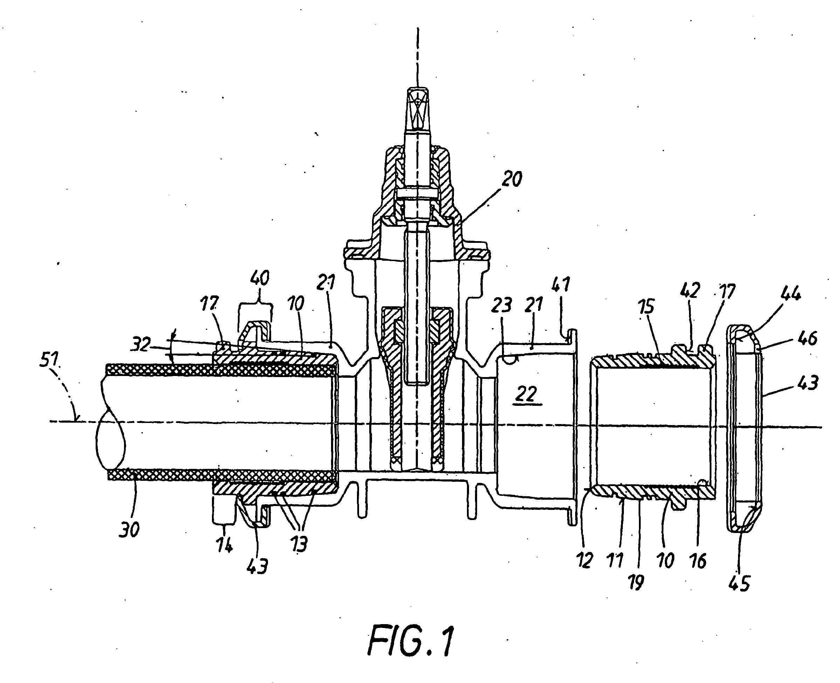

Fig. 1 zeigt eine erste Ausführungsform einer nicht erfindungsgemäßen Vorrichtung in der ersten Ausgestaltung. Die metallische Armatur 20 ist als Absperrschieber dargestellt, auf dessen vom Betrachter aus rechter Seite, die Vorrichtung vor dem Zusammenbau, und auf dessen linker Seite die Vorrichtung im Einbauzustand gezeigt sind. Die Armatur 20 verfügt über zwei Metallstutzen 21, die an ihrem Innenumfang 23 einen konischen Bereich aufweisen.

Die Kunststoffmuffe 10, die im Einbauzustand im Inneren 22 des Metallstutzens 21 angeordnet ist, weist an ihrer Außenseite 19, im Umfangsbereich 11, in Richtung des Stirnbereiches 12, ebenfalls einen konischen Bereich und Dichtmittel 13 auf. Der Innenumfang 23 des Metallstutzens 21 verläuft hier konisch nach innen zulaufend, während sich der Umfang 11 der Kunststoffmuffe 10 in Richtung ihres Außenendes 14 hin verbreitert. Im Einbauzustand wirken diese Bereiche zusammen, wodurch sich eine besonders dichte Verbindung zwischen der Kunststoffmuffe 10 und dem Metallstutzen 21 ergibt, und sich durch weiteres Einschieben der Kunststoffmuffe 10 in den Metallstutzen 21 der Anpressdruck an den Dichtmitteln 13 erhöhen lässt, so dass eine besonders gute Abdichtung entsteht. Daher ist es auch besonders vorteilhaft günstig, Dichtmittel 13 an dem konischen Bereich vorzusehen, beispielsweise in Form von O-Ringen. Der Winkel 32 der konischen Bereiche zur Mittelachse 51 beträgt empfehlenswerterweise maximal 7°, da bei einem solchen Winkel 32 Selbsthemmung auftritt.

Die Kunststoffmuffe 10 weist darüber hinaus im Bereich ihres Innenumfangs 16 Heizdrähte 15 auf, die zur Verschweißung eines Kunststoffrohres 30 im Inneren der Kunststoffmuffe 10 dienen. Die Heizdrähte 15 verfügen über elektrische Anschlussstellen 17, welche am Außenende 14 der Kunststoffmuffe 10 angeordnet sind.

Des Weiteren besitzt der Metallstutzen 21 einen Anschlag 41 und die Kunststoffmuffe 10 eine Schulter 42. Diese wirken im Einbauzustand mit einem Gegenanschlag 44 und eine Gegenschulter 45 des Klemmrings 43 zusammen und bilden so die Halteeinrichtung 40. Der Klemmring 43 weist darüber hinaus auch noch eine Ausnehmung 46 für die elektrischen Anschlussstellen 17 der Heizdrähte 15 auf, damit diese bei der Montage des Klemmrings 43 nicht beschädigt werden.

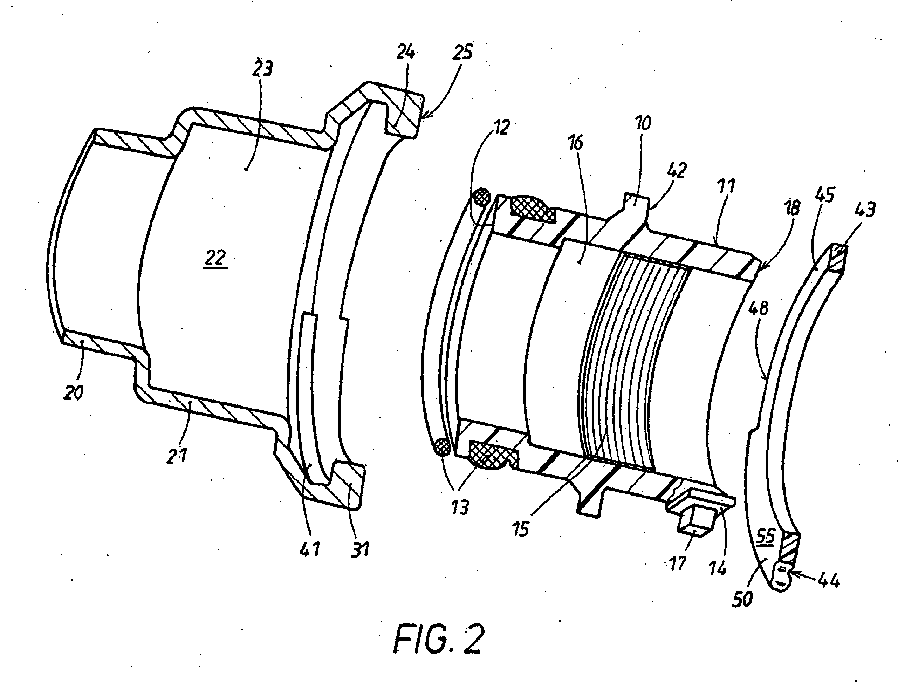

Fig. 2 zeigt in einer weiteren Ausführungsform der ersten Ausgestaltung einen Metallstutzen 21 der zu einer metallischen Armatur 20 gehört, die hier jedoch nur im Ansatz und gebrochen dargestellt ist. Der Metallstutzen 21 weist in seinem Inneren 22 einen Innenumfang 23 auf sowie einen Stirnbereich 25. Im Stirnbereich 25 sind Vorsprünge 24 vorgesehen. Diese Vorsprünge 24 sind als Halteelemente 31 ausgebildet, die am Innenumfang 23 des Metallstutzens 21 angebracht sind. Die Halteelemente 31 weisen dabei den Anschlag 41 auf und werden im Einbauzustand vom Klemmring 43 zumindest bereichsweise hintergriffen.

Des Weiteren zeigt Fig. 2 die Kunststoffmuffe 10, welche hier im Bereich ihres Außenumfangs 11 über zwei Dichtmittel 13 verfügt, von denen eines im Stirnbereich 12 der Kunststoffmuffe 10 angeordnet ist, und die Form eines O-Ringes hat. Im Bereich ihres Innenumfangs 16 weist die Kunststoffmuffe 10 Heizdrähte 15 auf, welche wiederum über elektrische Anschlussstellen 17 verfügen. Diese elektrischen Anschlussstellen 17 sind am Außenende 14 der Kunststoffmuffe 10 befindlich und an ihrer Stirnseite 18 angebracht. Hierbei sind die elektrischen Anschlussstellen 17 derart an der Kunststoffmuffe 10 angeordnet, dass diese im Einbauzustand weder vom Metallstutzen 21 noch vom Klemmring 43 verdeckt werden. Schließlich verfügt die Muffe noch über eine Schulter 42, welche im Einbauzustand mit dem Klemmring 43 zusammenwirkt um ein Herausrutschen der Kunststoffmuffe 10 aus dem Metallstutzen 21 zu verhindern.

Schließlich ist auch der Klemmring 43 in Fig. 2 dargestellt. Dieser verfügt sowohl über einen Gegenanschlag 44 für den Anschlag 41 am Metallstutzen 21 als auch über eine Gegenschulter 45 für die Schulter 42 an der Kunststoffmuffe 10. Vorliegend ist die eine Seite 55 des Klemmrings 43 als Gegenschulter 45 für die Schulter 42 an der Kunststoffmuffe 10 ausgeführt. Hierdurch wird die Herstellung des Klemmrings sehr einfach und kostengünstig. Die Gegenanschläge 44 sind hier als Gegenvorsprünge 50 zu den Vorsprüngen 24 des Metallstutzens 21 ausgeführt.

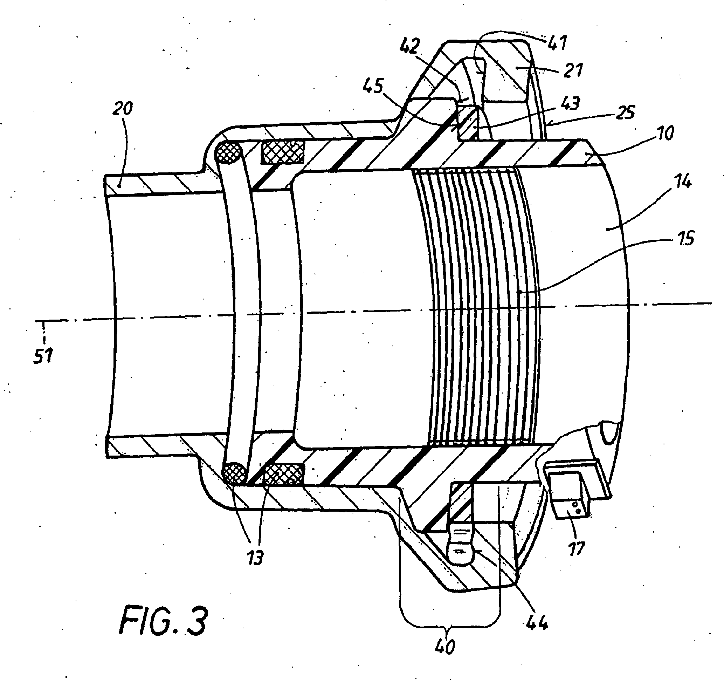

In Fig. 3 sind nun die Kunststoffmuffe 10, der Metallstutzen 21 der Armatur 20 und der Klemmring 43 im Einbauzustand dargestellt. Der Anschlag 41 am Metallstutzen 21 und die Schulter 42 an der Kunststoffmuffe 10 bilden zusammen mit dem Gegenanschlag 44 und der Gegenschulter 45 des Klemmrings 43 die Halteeinrichtung 40. Die Kunststoffmuffe 10 verfügt außerdem noch über Heizdrähte 15 zur elektrischen Verschweißung.

Der Einbauzustand wurde hier dadurch herbeigeführt, dass zunächst die Kunststoffmuffe 10 in den Metallstutzen 21 eingebracht wurde, wobei das Außenende 14 der Kunststoffmuffe 10 mit den elektrischen Anschlussstellen 17 aus dem Metallstutzen 21 herausragt. Danach wurde der Klemmring 43 in den Metallstutzen 20 eingeführt, wobei die eine Seite 55 des Klemmrings 43 als Gegenschulter 45 für die Schulter 42 an der Muffe dient und an dieser auch zur Anlage kommt. Danach wurde der Klemmring 43 im Metallstutzen 21 verdreht, wodurch die Gegenanschläge 44 die Anschläge 41 am Metallstutzen 21 hintergreifen. Hierdurch wird auf einfache Art die Kunststoffmuffe 10 vor dem Herausrutschen aus dem Metallstutzen 21 gesichert und zudem durch Verpressung der Dichtmittel 13 innen 22 am Metallstutzen 21 eine sichere und dichte Verbindung hergestellt. Der Klemmring 43 ist in Richtung der Mittelachse 51 des Metallstutzens 21 im Wesentlichen flach ausgestaltet. Hierdurch werden Materialkosten für den Klemmring 43 eingespart und die Herstellung erfolgt besonders einfach und kostengünstig.

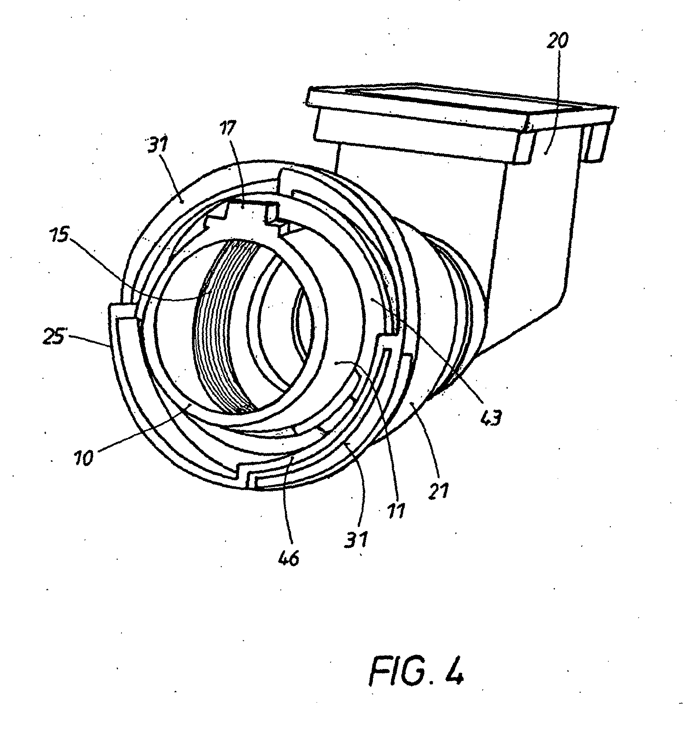

Eine Außenansicht des Ausführungsbeispiels gemäß Fig. 2 und 3 zeigt Fig. 4. Hier erkennt man die in den Metallstutzen 21 eingefügte Kunststoffmuffe 10 sowie den Klemmring 43 im Einbauzustand. Im Hintergrund ist noch die metallische Armatur 20 zu erkennen. Der Klemmring 43 ist hier bereits verdreht, so dass die Kunststoffmuffe 10 gegen Herausfallen aus dem Metallstutzen 21 gesichert ist. Im Umfangsbereich 11 der Kunststoffmuffe 10 sind am Außenende 14 die elektrischen Anschlussstellen 17 der Heizdrähte 15 vorgesehen. Im Bereich des Klemmrings 43 erkennt man die Ausnehmung 46 welche benötigt wird, um den Klemmring von der Stirnseite 18 der Kunststoffmuffe 10 her auf diese aufzuschieben, ohne die elektrischen Anschlussstellen 17 zu beschädigen. Im Stirnbereich 25 des Metallstutzens 21 sind zwei Halteelemente 31 vorgesehen.

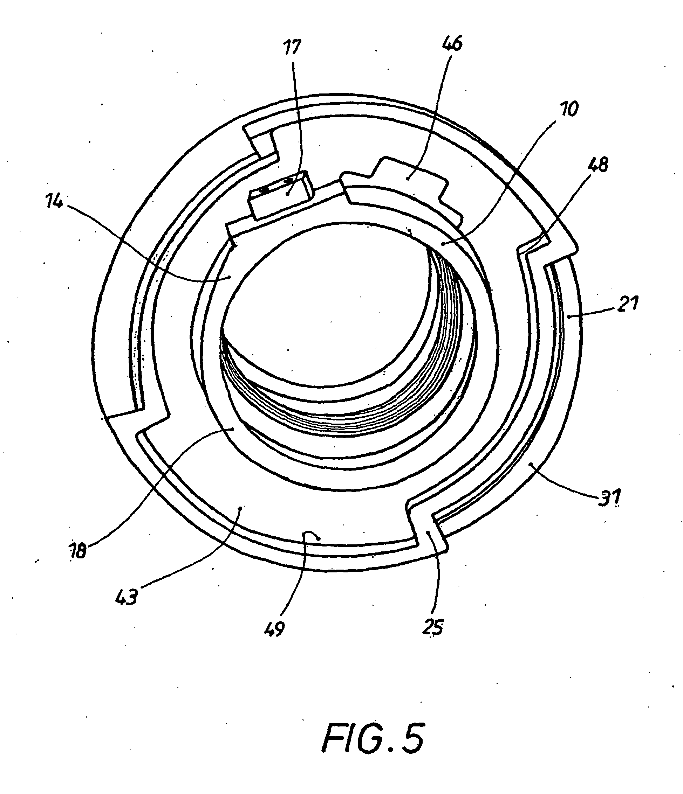

Die Fig. 5 bis 7 zeigen nun das Herbeiführen des Einbauzustandes durch den Klemmring 43 im Einzelnen. In diesem Ausführungsbeispiel sind die Gegenvorsprünge 47 am Klemmring 43 als Haltenocken 49 ausgeformt. Am Klemmring 43 sind hier zwei Haltenocken 49 vorgesehen, welche sich diametral gegenüberliegen und sich jeweils etwa über ein Viertel des Außenumfangs 48 des Klemmrings 43 erstrecken.

Im Stirnbereich 25 des Metallstutzens 21 sind zwei Halteelemente 31 vorgesehen, die sich ebenfalls diametral gegenüberliegen und sich auch in etwa über ein Viertel des Innenumfangs 23 des Metallstutzens 21 erstrecken.

In Fig. 5 wird der Klemmring 43 gezeigt zu Beginn der Herbeiführung des Einbauzustandes. Hierfür wird der Klemmring 43 über das Außenende 14 mit der Stirnseite 18 Kunststoffmuffe 10 geschoben. Dabei ist darauf zu achten, dass die Ausnehmung 46 über die elektrischen Anschlussstellen 17 geschoben wird, um diese nicht zu beschädigen. Danach wird der Klemmring 43 so ausgerichtet, dass die beiden Haltenocken 49 zwischen den Halteelementen 31 angeordnet sind.

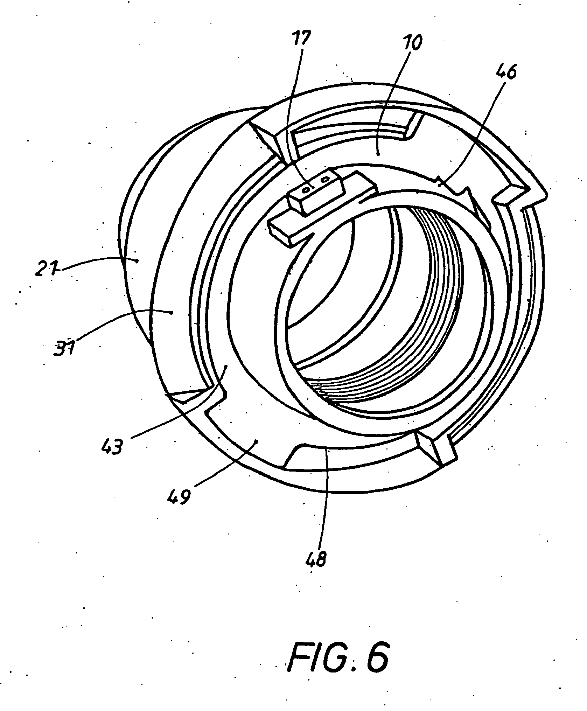

Wie aus Fig. 6 ersichtlich ist, wird danach der Klemmring 43 verdreht, wobei sich die Haltenocken 49 hinter die Halteelemente 31 schieben. Die Halteelemente 31 weisen hierbei die Anschläge 41 auf, während an den Haltenocken 49 die Gegenanschläge 44 vorgesehen sind.

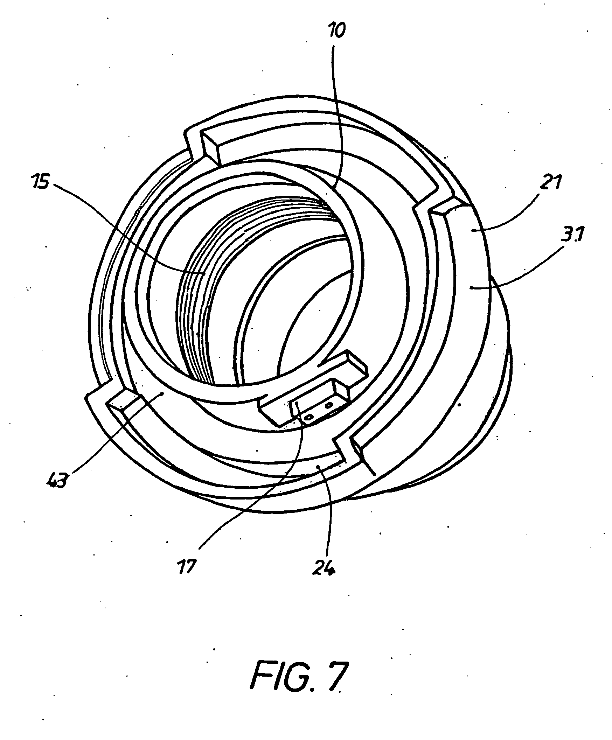

In Fig. 7 ist nun der Einbauzustand dargestellt. Die Haltenocken 49 haben sich vollständig hinter die Halteelemente 31 geschoben. Die Kunststoffmuffe 10 ist nunmehr gegen ein Herausfallen aus dem Metallstutzen 21 gesichert und hat eine dichte und sichere Verbindung zum Metallstutzen 21. Auch der Klemmring 43 ist nun gegen ein Herausfallen gesichert. Günstigerweise kann jetzt noch ein Sicherungselement angebracht werden, beispielsweise im Stirnbereich 25 des Metallstutzens 21.

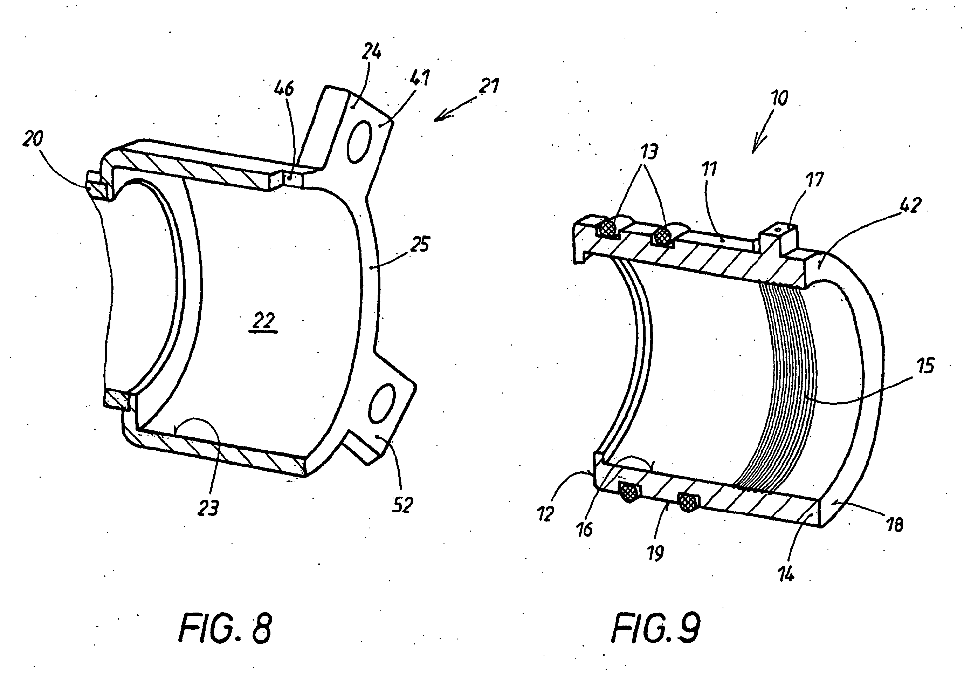

In Fig. 8 ist ein erfindungsgemäßer Metallstutzen 21 der metallischen Armatur 20 in einer erfindungsgemäßen Ausführungsform der ersten Ausgestaltung dargestellt. Hierbei ist die metallische Armatur 20 lediglich gebrochen angedeutet. Bei dieser kann es sich auch wieder beispielsweise um einen Absperrschieber, ein Ventil oder einfach nur um ein Metallrohr handeln. Der Metallstutzen 21 weist in seinem Inneren 22 einen Innenumfang 23 auf. Darüber hinaus besitzt der Metallstutzen 21 einen Vorsprung 24, der hier als Lasche 52 ausgebildet ist. An dem Vorsprung 24 befindet sich der Anschlag 41. Darüber hinaus verfügt der Metallstutzen 21 noch über die Ausnehmung 46 an seinem Stirnbereich 25, die im Einbauzustand der Aufnahme der elektrischen Anschlussstellen 17 der Kunststoffmuffe 10 dient.

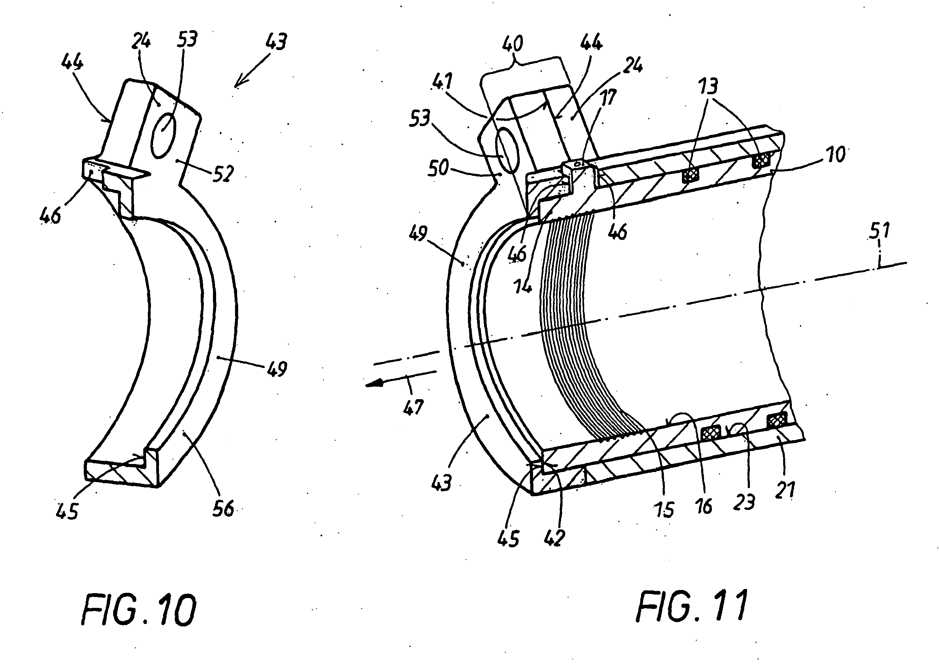

Fig. 9 zeigt die Kunststoffmuffe 10 in einer zu dem Metallstutzen 21 in Fig. 8 korrespondierenden Ausführungsform in einem perspektivischen Aufriss. In ihrem Umfangsbereich 11 verfügt die Kunststoffmuffe 10 über zwei Dichtungsmittel 13, die vorliegend als O-Ringe ausgeführt werden. Diese Dichtungsmittel 13 werden bei der Montage der Vorrichtung am Innenumfang 23 des Metallstutzens 21 verpresst. Hierdurch entsteht eine besonders sichere Verbindung zwischen Kunststoffmuffe 10 und Metallstutzen 21. In einem anderen Ausführungsbeispiel können die Dichtungsmittel 13 auch im Stirnbereich 12 der Kunststoffmuffe 10 angeordnet sein. An der Stirnseite 18 befindet sich die Schulter 42, die Teil der Halteeinrichtung 40 ist und der Sicherung der Kunststoffmuffe 10 im Einbauzustand dient, wie in Fig. 11 noch gezeigt werden wird.

Im Bereich ihres Innenumfangs 16 weist die Kunststoffmuffe 10 Heizdrähte 15 auf. Im Montagefall wird das eine Ende des Kunststoffrohres 30 (hier nicht gezeigt) in die Kunststoffmuffe 10 im Bereich dieser Heizdrähte 15 eingeführt. Danach werden die Heizdrähte 15 erhitzt, wobei eine Verschweißung zwischen dem Kunststoffrohr 30 und der Kunststoffmuffe 10 stattfindet. Dies ist eine bewährte Methode, um ein Kunststoffrohr 30 anzuschließen. Die Verbindung zwischen Kunststoffmuffe 10 und Kunststoffrohr 30 ist sicher und dicht, selbst bei gasförmigen Medien oder hohen Drücken. Darüber hinaus ist die Verbindung einfach und schnell zu realisieren.

In einer besonders bevorzugten Ausführungsform sind die Heizdrähte 15 am Innenumfang 16 der Kunststoffmuffe 10 bifilar angeordnet. Hierdurch entsteht nur ein Ort für die Anschlussstellen 17. Hierdurch wird der Anschluss der Kunststoffmuffe 10 erleichtert. Mittels der Anschlussstellen 17 wird Strom durch die Heizdrähte 15 geleitet, wobei diese sich erhitzen und eine Verschweißung zwischen der Kunststoffmuffe 10 und dem Kunststoffrohr bewirken.

Die elektrischen Anschlussstellen 17 der Heizdrähte 15 werden in diesem Ausführungsbeispiel so im Bereich des Außenendes 14 der Kunststoffmuffe 10 angeordnet, dass sie nicht durch den Metallstutzen 21 oder dem Klemmring 43 verdeckt werden. Dies wird durch eine Ausnehmung 46 an dem Klemmring 43 bzw. am Metallstutzen 21 realisiert, welche in den Fig. 8 bzw. 10 näher erkennbar ist. Durch diese Ausnehmung 46 werden die elektrischen Anschlussstellen 17 auch während der Montage zugänglich, so dass die Verschweißung schnell und unkompliziert erfolgen kann.

Der Klemmring 43 wird aus Fig. 10 näher ersichtlich. Er verfügt über einen Gegenanschlag 44 für den Anschlag 41 am Metallstutzen 21 sowie eine Gegenschulter 45 für die Schulter 42 an der Kunststoffmuffe 10. Der Gegenanschlag 44 wird an einem Vorsprung 24 gebildet, der hier als Lasche 52 ausgeführt ist.

An seiner zweiten Seite 56 weist der Klemmring 43 ein Halteelement 49 auf, welches in Richtung seiner Mittelachse weist. An diesem Halteelement 49 ist die Gegenschulter 45 für die Schulter 42 der Kunststoffmuffe 10 angeordnet. Des Weiteren weist der Klemmring 43 die bereits erwähnte Ausnehmung 46 für die elektrischen Anschlussstellen 17 der Kunststoffmuffe auf, so dass diese im Einbauzustand zugänglich sind und nicht beschädigt werden.

Des Weiteren verfügt der Klemmring 43 noch über das schematisch angedeutete Sicherungselement 53, welches ihn an ungewollten Verdrehungen, Verschiebungen oder Lösen hindert und hier beispielsweise als Verschraubung, Niet oder Sicherungsstift ausgeführt sein kann.

In Fig. 11 ist schließlich die zusammengebaute Vorrichtung aus den Fig. 8 bis 10 mit der vollständigen Halteeinrichtung 40 ersichtlich. Die Kunststoffmuffe 10 ist im Inneren 22 des Metallstutzens 21 angeordnet. Die Dichtungsmittel 13 sind am Innenumfang 23 des Metallstutzens 21 verpresst. Die Kunststoffmuffe 10 weist an ihrem Innenumfang 16 Heizdrähte 15 auf, die über Anschlussstellen 17 verfügen. Am Außenende 14 der Kunststoffmuffe 10 ist der Klemmring 43 angeordnet, der in diesem Bereich die Kunststoffmuffe 10 umgreift. Der Anschlag 41 am Metallstutzen 21 steht in Wirkverbindung mit dem Gegenanschlag 44 am Klemmring 43. Ebenso steht die Schulter 42 an der Kunststoffmuffe 10 in Eingriff mit der Gegenschulter 45 am Klemmring 43. Im oberen Bereich der Fig. 11 kann die gesamte Halteeinrichtung 40 im Einbauzustand betrachtet werden. Ebenfalls sind in diesem Bereich die elektrischen Anschlussstellen 17 der Kunststoffmuffe 10 zu erkennen, die durch die Ausnehmungen 46 am Metallstutzen 21 und am Klemmring 43 nach außen zugänglich hinausragen.

Zur Herbeiführung des Einbauzustandes wird der Klemmring 43 über das Außenende 14 der Kunststoffmuffe 10 geschoben, wobei der Klemmring 43 dieses Außenende 14 umgreift und der in Richtung der Mittelachse 51 weisende Haltenocken 49 mit seiner Gegenschulter 45 mit der Schulter 42 der Kunststoffmuffe 10 in Wirkverbindung gebracht wird. Dies ist eine besonders einfache und kostengünstige Möglichkeit, um die erfindungsgemäße Anordnung herzustellen und ist darüber hinaus auch noch besonders einfach in der Montage.

Wird nun versucht, die Kunststoffmuffe 10 in Auszugsrichtung 47 aus dem Metallstutzen 21 herauszuziehen, so werden durch den Klemmring 43 keine Biegemomente auf die Kunststoffmuffe 10 übertragen. Die Gegenschulter 45 befindet sich an einem Haltenocken 49, welcher vom Klemmring 43 in Richtung der Mittelachse 51 ausgebildet ist. Der Anschlag 41 ist am Vorsprung 24 gebildet, während der Gegenanschlag 44 am Gegenvorsprung 50 sich befindet. Der Vorsprung 24 und der Gegenvorsprung 50 werden durch das nur schematisch angedeutete Sicherungselement 53 gegen ungewollte Verdrehungen und Verschiebungen gesichert.

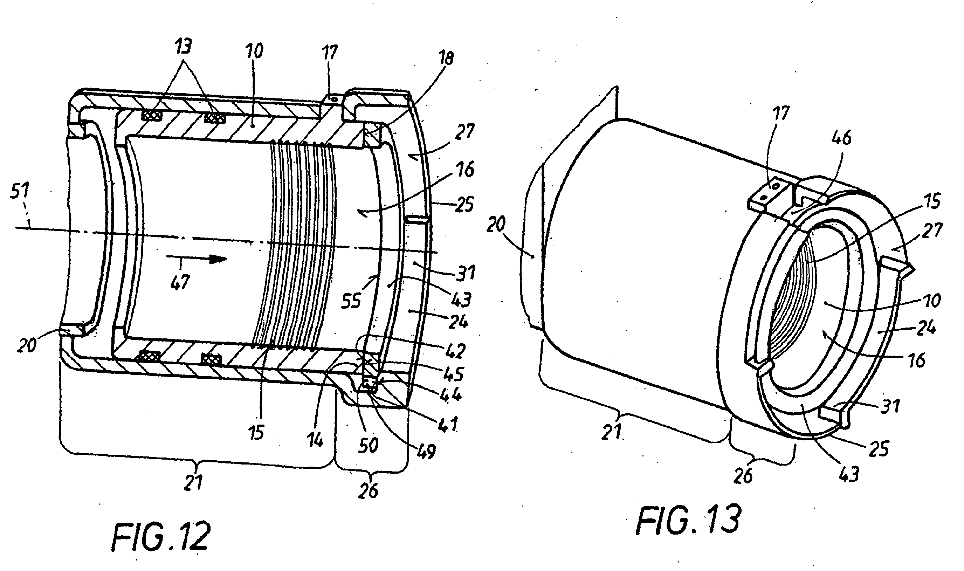

Die Fig. 12 und 13 zeigen eine weitere erfindungsgemäße Ausführungsform in der ersten Ausgestaltung. Im Stirnbereich 25 des Metallstutzens 21 ist ein ringartiger Bereich 26 angeordnet, an welchem der Anschlag 41 sich befindet. Die den Anschlag 41 aufweisenden Vorsprünge 24 und die den Gegenanschlag 44 aufweisenden Gegenvorsprünge 50 sind hier als Haltenocken 49 ausgebildet. Diese werden im Einbauzustand vom Klemmring 43 zumindest bereichsweise nach Art eines Bajonettverschlusses hintergriffen. Der Klemmring 43 ist hierbei in Richtung der Mittelachse 51 im Wesentlichen flach ausgebildet. Dies ist eine besonders einfache und komfortable Art des Zusammenbaus der erfindungsgemäßen Vorrichtung.

Die Herbeiführung des Einbauzustands dieser Ausführungsform wird zunächst die Kunststoffmuffe 10 in den Metallstutzen 21 eingebracht. Der Klemmring 43 wird in den ringartigen Bereich 26 eingeführt, wobei er mit seinen Haltenocken 49 dort in den ringartigen Bereich 26 eingreift, wo sich keine Halteelemente 31 des Metallstutzens 21 befinden. Sodann wird der Klemmring 43 im ringartigen Bereich 26 verdreht, wodurch die Haltenocken 49 des Klemmrings 43, an denen der Gegenanschlag 44 sich befindet, die Halteelemente 31 des ringartigen Bereichs 26, der den Anschlag 41 aufweist, zumindest bereichsweise hintergreifen. Die eine Seite 55 des Klemmringes 43 dient hierbei als Gegenschulter 45 zur Schulter 42 an der Kunststoffmuffe 10, welche hier durch die Stirnseite 18 des Außenendes 14 der Kunststoffmuffe 10 gebildet wird.

Der ringartige Bereich 26 ist hier einstückig mit dem Metallstutzen 21 ausgebildet. Hierdurch ergibt sich eine besonders einfache und kostengünstige Herstellungsmethode des Metallstutzens.

Fig. 13 zeigt nun das Ausführungsbeispiel von Fig. 12 im Zusammenbau. Hier befindet sich die Kunststoffmuffe 10 im Inneren des Metallstutzens 21. Der ringartige Bereich 26 weist zwei Halteelemente 31 und der Klemmring 43 weist zwei Haltenocken 49 auf, die sich jeweils diametral gegenüber liegen und je in etwa ein Viertel des Innenumfangs 27 des ringartigen Bereiches 26 bzw. des Außenumfangs 48 des Klemmrings 43 einnehmen. Da der Einbauzustand hier bereits herbeigeführt ist, hintergreifen die Haltenocken 49 des Klemmrings 43 die Halteelemente 31 des ringartigen Bereiches 26. Des Weiteren ist die Ausnehmung 46 zu erkennen, die dazu dient die elektrischen Anschlussstellen 17 der Heizdrähte 15, welche am Innenumfang 16 der Kunststoffmuffe 10 angeordnet sind, zugänglich zu lassen, damit durch Beaufschlagung mit elektrischer Energie eine Verschweißung der Kunststoffmuffe 10 mit dem Kunststoffrohr 30 stattfinden kann.

Auch bei dieser Ausführungsform werden bei Beaufschlagung in Auszugsrichtung 47 keine Biegemomente auf die Kunststoffmuffe 10 übertragen, welche zu einer Beschädigung oder gar Zerstörung der Kunststoffmuffe 10 und somit zu Undichtigkeiten der Vorrichtung führen könnten. Auch ein mechanisches Fließen der Kunststoffmuffe 10 wird verhindert, da diese zwischen dem Metallstutzen 21 der Armatur 20 und dem Klemmring 43 gekapselt ist.

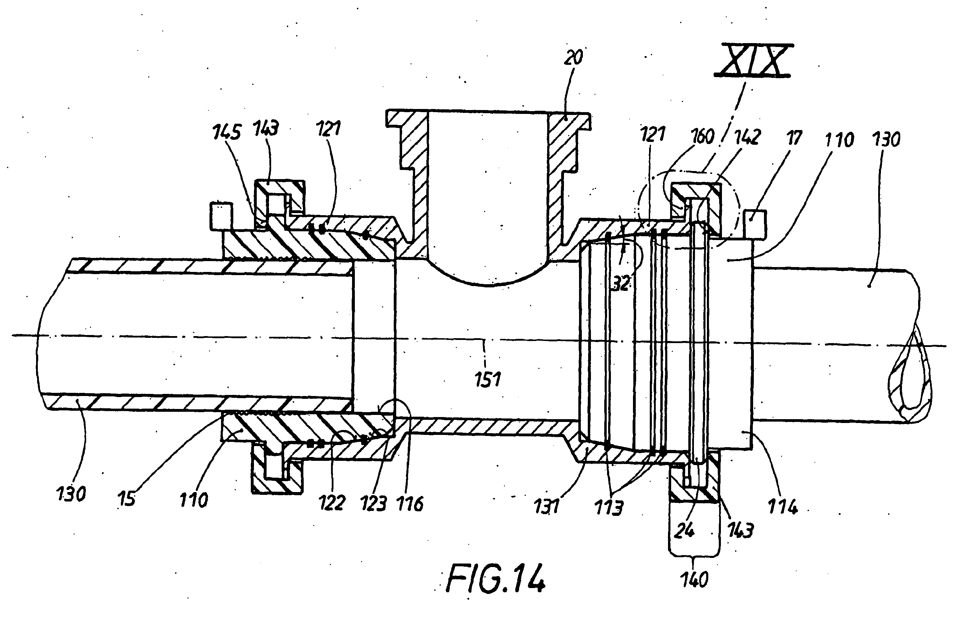

Fig. 14 zeigt eine nicht erfindungsgemäße Vorrichtung gemäß der zweiten Ausgestaltung, bei der eine Verbindung zwischen einem ersten Rohr 131 und einem zweiten Rohr 130 geschaffen wird. Die Verbindung wird zwischen dem Stutzen 121 des ersten Rohres 131 mit Hilfe einer Muffe 110 realisiert. Das erste Rohr 131 gehört hier zu einer Armatur 20, an welche auf zwei Seiten zweite Rohre 130 angeschlossen wurden. Das erste Rohr 131 kann selbstverständlich genauso gut zu einem Formstück gehören, oder aber einfach nur ein Rohr sein. Die Muffe 110 ist hierzu im Inneren 122 des Stutzens 121 angeordnet, wobei das Außenende 114 der Muffe 110 aus dem Stutzen 121 herausragt. Im Außenbereich der Muffe 110 sind Dichtmittel 113 vorgesehen, welche eine Abdichtung zwischen der Muffe 110 und dem Stutzen 121 ermöglichen.

Der Stutzen 121 verfügt an seinem Innenumfang 123 über einen konischen Bereich. Auch die Muffe 110 besitzt einen konischen Bereich, der an ihrem Außenumfang angeordnet ist, wobei die Muffe 110 im Einbauzustand mit ihrem konischen Bereich in den konischen Bereich des Stutzens 121 eingreift. Eines der Dichtmittel 113 ist ebenfalls im konischen Bereich der Muffe 110 angeordnet. Dieses wird bei der Montage der Muffe 110 im Stutzen 121 besonders gut verpresst, um hier eine gute Abdichtung zwischen der Muffe 110 und dem Stutzen 121 zu erhalten. Die konischen Bereiche weisen dabei einen Winkel 32 von maximal 7° zur Mittelachse 151 des Stutzens 121 auf, da in diesem Bereich Selbsthemmung eintritt.

Um die Muffe 110 im Stutzen 121 zu sichern, wird ein Stützring 143 verwendet. Dieser verfügt über eine Gegenschulter 145 für die Schulter 142 an der Muffe 110, wobei letztere an einem Vorsprung 24 gebildet wird, und über ein Verriegelungselement 160. Die Wirkungsweise des Stützringes 143 und des Verriegelungselementes 160 sowie der kompletten Halteeinrichtung 140 sollen später noch näher erklärt werden.

Das zweite Rohr 130 besteht aus Kunststoff, beispielsweise Polyethylen. Die Muffe 110 ist als Elektroschweißmuffe ausgeführt und weißt in ihrem Innenumfang 116 zumindest bereichsweise Heizdrähte 15 auf. Die Verschweißung zwischen der Muffe 110 und dem zweiten Rohr 130 findet nun durch Beaufschlagung der Heizdrähte 15 mit elektrischer Energie statt. Die Heizdrähte 15 heizen sich dann auf und bewirken die Verschweißung. Hierzu verfügen die Heizdrähte 15 über elektrische Anschlussstellen 17, welche im Bereich des Außenendes 114 der Muffe 110 angeordnet sind und zwar so, dass sie weder vom Stutzen 121 noch vom Stützring 143 verdeckt werden.

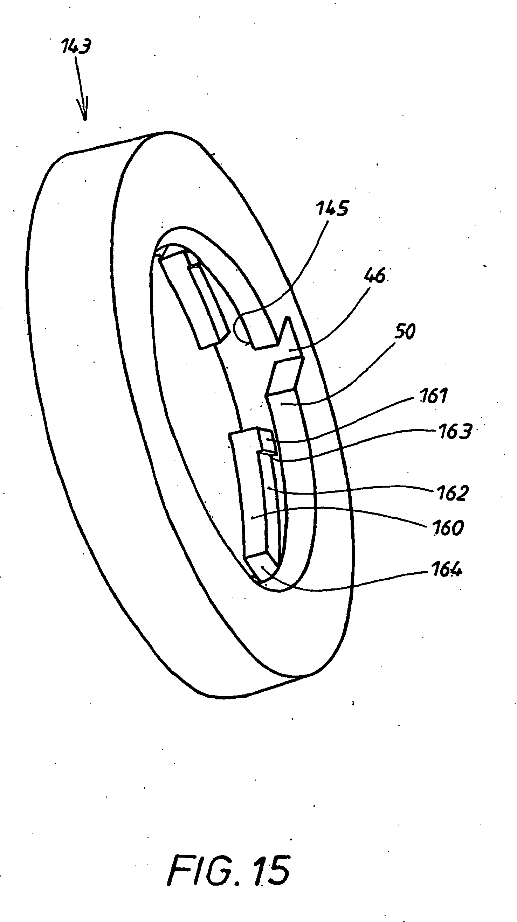

Der Stützring 143 aus Fig. 14 ist in Fig. 15 näher dargestellt. Er verfügt über mehrere Verriegelungselemente 160, welche als etwa L-förmige Nocken 164 ausgeführt sind. An diesen Nocken 164 sind jeweils eine Gleitfläche 161, eine Anlagefläche 162 und eine Sicherungsfläche 163 angeordnet. Während der Montage gleiten die Verriegelungselemente 160 mit ihren Gleitflächen 161 auf den Schrägflächen 128 des Stutzens 121, und kommen schließlich mit ihren Anlageflächen 162 auf diesen zur Anlage. Die Sicherungsflächen 163 hintergreifen dann den Anschlag 141 des Stutzens 121.

Des Weiteren verfügt der Stützring 143 noch über eine Gegenschulter 145 für die Schulter 142 der Muffe 110. Die Gegenschulter 145 ist hier als Gegenvorsprung 50 ausgebildet, der im Montagefall mit der als Vorsprung 24 ausgebildeten Schulter 142 an der Muffe 110 zusammenwirkt. Die Gegenschulter 145 besitzt eine Ausnehmung 46 für die elektrischen Anschlussstellen 17 der Heizdrähte 15, damit diese bei der Montage des Stützrings 143 nicht beschädigt werden.

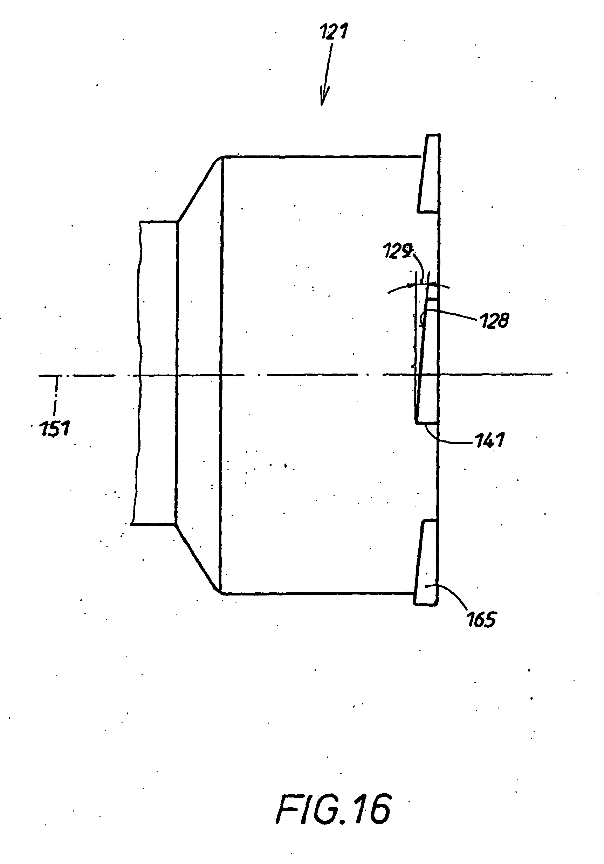

Fig. 16 zeigt den erfindungsgemäßen Stutzen 121 aus Fig. 14 im Detail. Dieser Stutzen 121 verfügt über mehrere Schrägflächen 128, welche an Gegennocken 165 für die Nocken 164 des Stützrings 143 angeordnet sind. Der Winkel 129 der Schrägfläche 128 bezogen auf die Fläche, die senkrecht auf die Mittelachse 151 des Stutzens 121 steht, beträgt hier 5°. Des Weiteren ist am Gegennocken 165 noch ein Anschlag 141 angeordnet, welche im Montagefall von der Sicherungsfläche 163 des Verriegelungselements 160 hintergriffen wird.

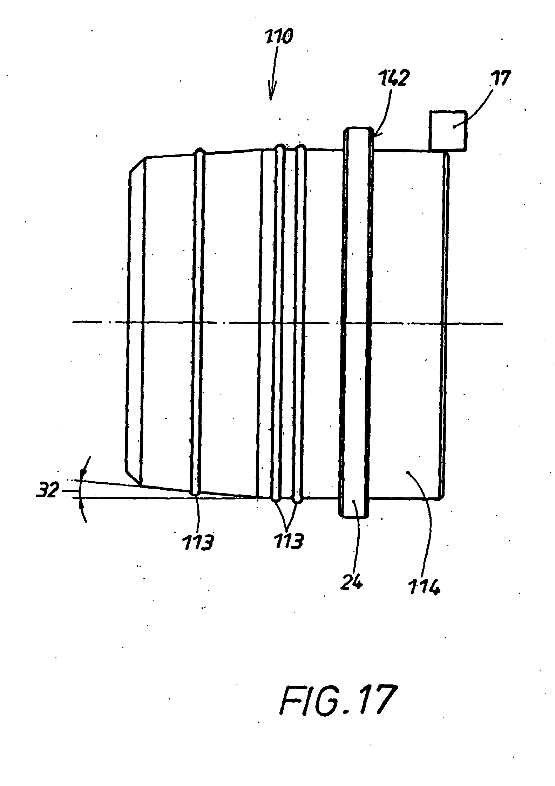

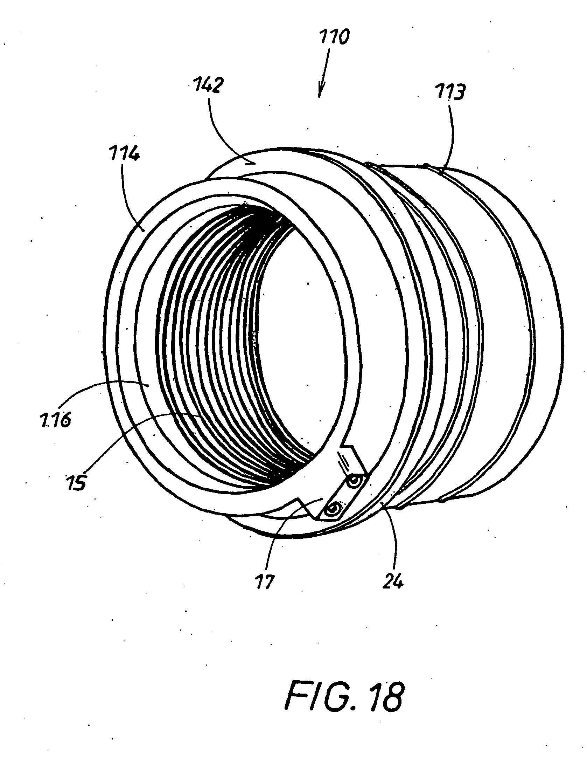

Die Muffe 110 aus Fig. 14 ist in den Fig. 17 und 18 näher dargestellt. Die Muffe 110 verfügt an ihrem Außenumfang 11 über mehrere Dichtmittel 113, von denen zumindest eines im konischen Bereich der Muffe 110 angeordnet ist. Dies ist besonders vorteilhaft, weil die Muffe 110 bei der Montage in den Stutzen 121 hineingedrückt wird und im konischen Bereich der Muffe 110 das Dichtmittel 113 am konischen Bereich des Stutzens 121 verpresst wird. Der Winkel 32 des konischen Bereiches sollte günstigerweise 7° nicht übersteigen. Die Schulter 142 ist hier an einem Vorsprung 24 angeordnet. Im Bereich des Innenumfangs 116 verfügt die Muffe 110 über Heizdrähte 15, welche in diesem bevorzugten Ausführungsbeispiel bifilar angeordnet sind, und am Außenende 114 der Muffe 110 über elektrische Anschlussstellen 17 verfügen.

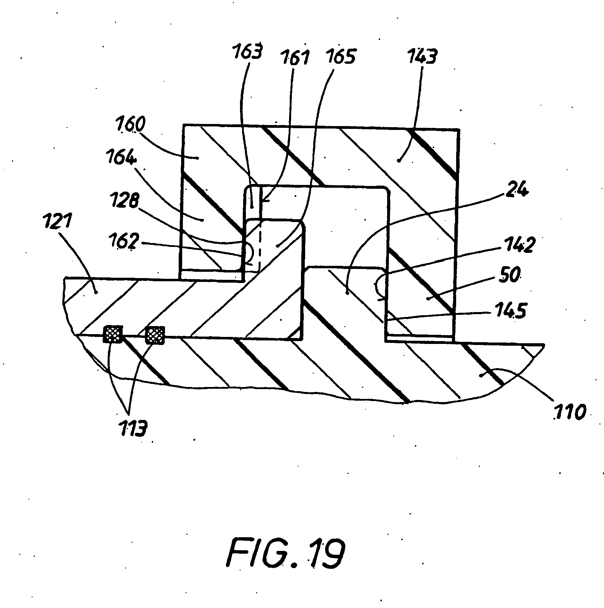

In Fig. 19 ist der Ausschnitt VI aus Fig. 14 vergrößert im Schnitt dargestellt. Hier wird das Zusammenwirken des Stutzens 121, der Muffe 110 und des Stützrings 143 im Montagefall deutlich. Die Schulter 142 der Muffe 110, die hier an einem Vorsprung 24 angeordnet ist, wirkt mit der Gegenschulter 145 des Stützrings 143 welche sich an einem Gegenvorsprung 50 befindet, zusammen. Ebenso ist zu erkennen, dass die Anlagefläche 162 des Verriegelungselements 160, welches als L-förmiger Nocken 164 ausgebildet ist, an der Schrägfläche 128, welche an einem Gegennocken 165 gebildet wird, anliegt. Die Sicherungsfläche 163 hintergreift dabei den hier nicht dargestellten Anschlag 141 am Stutzen 121. Der Anschlag 141 befindet sich hierbei auf der dem Betrachter der Fig. 19 abgewandten Seite des Gegennockens 165. Die Gleitfläche 161 ist während der Montage des Stützrings 143 über die Schrägfläche 128 des Stutzens 121 geglitten und befindet sich jetzt hinter dem Gegennocken 165. Die Dichtungsmittel 113 sind zwischen der Muffe 110 und dem Stutzen 121 verpresst.

Es wird darauf hingewiesen, dass noch vielfache Ausführungen und Anwandlungen möglich sind. Beispielsweise können der Anschlag bzw. der Gegenanschlag auch durch Vertiefungen gebildet werden. Es kann auch eine andere Anzahl an Dichtmitteln an der Muffe vorgesehen sein; diese können auch an anderen Stellen angeordnet sein und nicht durch O-Ringe gebildet werden. Die Schulter, die Gegenschulter, der Anschlag, der Gegenanschlag, die Haltelemente, die Haltenocken, der Nocken, der Gegennocken, das Verriegelungselement und die Schrägfläche können auch mehrfach ausgebildet sein und andere Formen als die hier dargestellten aufweisen. Die Erfindung ist nur auf die folgenden Ansprüche beschränkt.

### Bezugszeichenliste:

- 10: Kunststoffmuffe
- 11: Umfangsbereich von 10
- 12: Stirnbereich von 10
- 13: Dichtungsmittel
- 14: Außenende von 10
- 15: Heizdrähte
- 16: Innenumfang von 10
- 17: Elektrische Anschlussstellen von 15
- 18: Stirnseite von 14
- 19: Außenseite von 10
- 20: Metallische Armatur
- 21: Metallstutzen
- 22: Inneres von 21
- 23: Innenumfang von 21
- 24: Vorsprung
- 25: Stirnbereich von 21
- 26: Ringartiger Bereich
- 27: Innenumfang von 26
- 30: Kunststoffrohr
- 31: Halteelemente
- 32: Winkel des konischen Bereichs
- 40: Halteeinrichtung
- 41: Anschlag an 21
- 42: Schulter an 10
- 43: Klemmring
- 44: Gegenanschlag zu 41
- 45: Gegenschulter zu 42
- 46: Ausnehmung an 26, 43 bzw. 143
- 47: Richtung der Zugbelastung
- 48: Außenumfang von 43
- 49: Haltenocken

- 50: Gegenvorsprung
- 51: Mittelachse
- 52: Lasche
- 53: Sicherungselement
- 55: Eine Seite von 43
- 56: Zweite Seite von 43
- 110: Muffe
- 113: Dichtungsmittel
- 114: Außenende von 110
- 116: Innenumfang von 110
- 121: Stutzen
- 122: Inneres von 121
- 123: Innenumfang von 121
- 128: Schrägfläche an 121
- 129: Neigung von 128
- 130: Zweites Rohr
- 131: Erstes Rohr
- 140: Halteeinrichtung
- 141: Anschlag an 121
- 142: Schulter an 110
- 143: Stützring
- 145: Gegenschulter für 142
- 151: Mittelachse
- 160: Verriegelungselement
- 161: Gleitfläche an 160
- 162: Anlagefläche an 160
- 163: Sicherungsfläche an 160
- 164: Nocken
- 165: Gegennocken

## Patentansprüche

1. Vorrichtung zum Einrichten eines Übergangs zwischen einer metallischen Armatur (20) und einem Kunststoffrohr (30) für strömende Medien,
mit einem Metallstutzen (21) an der Armatur (20) an den das Kunststoffrohr (30) anschließbar ist,
und mit einer zum Anschluss des Kunststoffrohres (30) dienenden Kunststoffmuffe (10), welche überwiegend aus Kunststoff besteht, wobei die Kunststoffmuffe (10) mit dem Kunststoffrohr (30) verschweißbar ist,
wobei im Umfangs- (11) und / oder Stirnbereich (12) der Kunststoffmuffe (10) mindestens ein Dichtungsmittel (13) angeordnet ist,
wobei die Kunststoffmuffe (10) bereichsweise im Inneren (22) des Metallstutzens (21) anbringbar ist, und mit ihrem Außenende (14) herausragt,
wobei die Vorrichtung weiterhin über eine dreiteilige Halteeinrichtung (40) verfügt, umfassend einen Anschlag (41) am Metallstutzen (21), eine Schulter (42) an der Kunststoffmuffe (10), sowie einen Klemmring (43),
wobei der Klemmring (43) über einen Gegenanschlag (44) für den Anschlag (41) am Metallstutzen (21) und über eine Gegenschulter (45) für die Schulter (42) an der Kunststoffmuffe (10) verfügt, welche jeweils miteinander in Eingriff bringbar sind, wodurch ein Einbauzustand entsteht,
**dadurch gekennzeichnet,**
**dass** die Schulter (42) an der Stirnseite (18) des Außenendes (14) der Kunststoffmuffe (10) angeordnet ist, wodurch bei Zugbelastung (47) der Kunststoffmuffe (10) in Richtung ihres Außenendes (14), keine Biegemomente von der Schulter (42) auf die Kunststoffmuffe (10) übertragen werden.

2. Vorrichtung nach Anspruch 1, **dadurch gekennzeichnet, dass** die dreiteilige Halteeinrichtung (40) am Innenumfang (23) des Metallstutzens (21) vorgesehen ist.

3. Vorrichtung nach einem oder mehreren der Ansprüche 1 oder 2, **dadurch gekennzeichnet, dass** der Klemmring (43) den Anschlag (41) nach Art eines Bajonettverschlusses hintergreift.

4. Vorrichtung nach einem oder mehreren der Ansprüche 1 bis 3, **dadurch gekennzeichnet, dass** der Anschlag (41) an einem oder mehreren Vorsprüngen (24) gebildet wird,
während der Gegenanschlag (45) an einem oder mehreren Gegenvorsprüngen (50) gebildet wird, die jeweils miteinander korrespondierend zusammenführbar sind.

5. Vorrichtung nach Anspruch 4, **dadurch gekennzeichnet, dass** der bzw. die Vorsprünge (24) und / oder der bzw. die Gegenvorsprünge (50) als Laschen (52) ausgebildet sind.

6. Vorrichtung nach einem oder mehreren der Ansprüche 1 bis 5, **dadurch gekennzeichnet, dass** im Stirnbereich (25) des Metallstutzens (21) ein ringartiger Bereich (26) vorgesehen ist, an welchem den Anschlag (41) aufweisende Halteelemente (31) vorgesehen sind, die im Einbauzustand vom Klemmring (43) zumindest bereichsweise hintergriffen werden.

7. Vorrichtung nach Anspruch 6, **dadurch gekennzeichnet, dass** der ringartige Bereich (26) zwei Halteelemente (31) aufweist, die sich diametral gegenüber liegen.

8. Vorrichtung nach Anspruch 6 oder 7, **dadurch gekennzeichnet, dass** jedes Haltelement (31) etwa die Größe eines Viertels des Innenumfangs (27) des ringartigen Bereichs (26) aufweist.

9. Vorrichtung nach einem oder mehreren der Ansprüche 1 bis 8, **dadurch gekennzeichnet, dass** am Außenumfang (48) des Klemmrings (43) radial sich erstreckende Haltenocken (49) vorgesehen sind, die den Gegenanschlag (44) für den Anschlag (41) am Metallstutzen (21) aufweisen.

10. Vorrichtung nach Anspruch 9, **dadurch gekennzeichnet, dass** der Klemmring (43) zwei Haltenocken (49) aufweist, die sich diametral gegenüber liegen.

11. Vorrichtung nach einem der Ansprüche 9 oder 10, **dadurch gekennzeichnet, dass** jeder der Haltenocken (49) sich in etwa über ein Viertel des Außenumfangs (48) des Klemmrings (43) erstreckt.

12. Vorrichtung nach einem oder mehreren der Ansprüche 6 bis 8 und 9 bis 11, **dadurch gekennzeichnet, dass** bei der Herbeiführung des Einbauzustands der Vorrichtung zunächst die Kunststoffmuffe (10) in den Metallstutzen (21) eingebracht wird,
sodann der Klemmring (43) in den ringartigen Bereich (26) eingeführt wird, wobei gegebenenfalls der bzw. die Haltenocken (49) des Klemmrings (43) dort in den ringartigen Bereich (26) eingreifen, wo keine Halteelemente (31) sich befinden,
und zuletzt der Klemmring (43) im Metallstutzen (21) verdreht wird, wodurch die Haltenocken (49) die Halteelemente (31) zumindest bereichsweise hintergreifen.

13. Vorrichtung nach einem oder mehreren der Ansprüche 6 bis 12, **dadurch gekennzeichnet, dass** der ringartige Bereich (26) mit dem Metallstutzen (21) einstückig ausgeführt ist.

14. Vorrichtung nach einem oder mehreren der Ansprüche 1 bis 13, **dadurch gekennzeichnet, dass** der Klemmring (43) in Richtung der Mittelachse (51) im Wesentlichen flach ausgestaltet ist.

15. Vorrichtung nach einem oder mehreren der Ansprüche 1 bis 14, **dadurch gekennzeichnet, dass** die eine Seite (55) des Klemmrings (43) als Gegenschulter (45) für die Schulter (42) an der Kunststoffmuffe (10) dient.

16. Vorrichtung nach einem oder mehreren der Ansprüche 1 bis 15, **dadurch gekennzeichnet, dass** die Muffe (10) mit dem Kunststoffrohr (30) mittels Stumpfschweißverfahren verbunden wird.

17. Vorrichtung nach einem oder mehreren der Ansprüche 1 bis 16, **dadurch gekennzeichnet, dass** durch die Montage des Klemmringes (43) die Dichtungsmittel (13) der Muffe (10) am Stutzen (21) verpresst werden.

18. Vorrichtung nach einem oder mehreren der Ansprüche 1 bis 17, **dadurch gekennzeichnet, dass** die Muffe (10) Heizdrähte (15) enthält, die am Innenumfang (16) der Muffe (10) sich befinden.

19. Vorrichtung nach Anspruch 18, **dadurch gekennzeichnet, dass** das eine Ende des Kunststoffrohres (30) in die Muffe (10) zumindest im Bereich der Heizdrähte (15) eingeführt wird,
und dass durch das Erhitzen der Heizdrähte (15) eine Verschweißung des Kunststoffrohres (30) mit der Muffe (10) erfolgen kann.

20. Vorrichtung nach einem oder mehreren der Ansprüche 18 oder 19, **dadurch gekennzeichnet, dass** die Muffe (10) über einen Indikator verfügt, durch welchen, auch im Einbauzustand, ersichtlich ist, wann eine ausreichende Hitzeentwicklung im Bereich der Heizdrähte (15) stattgefunden hat um eine gute Verschweißung der Muffe (10) mit dem Kunststoffrohr zu bewirken.

21. Vorrichtung nach einem oder mehreren der Ansprüche 18 bis 20, **dadurch gekennzeichnet, dass** die Heizdrähte (15) an der Muffe (10) bifilar angeordnet sind.

22. Vorrichtung nach einem oder mehreren der Ansprüche 18 bis 21, **dadurch gekennzeichnet, dass** die Heizdrähte (15) über elektrische Anschlussstellen 17) verfügen,
welche im Bereich des Außenendes (14) der Muffe (10) so angeordnet sind, dass sie nicht durch den Stutzen (21) oder den Klemmring (43) verdeckt werden.

23. Vorrichtung nach Anspruch 22, **dadurch gekennzeichnet, dass** der Klemmring (43) und / oder das Ende des Stutzens (21) Ausnehmungen (46) für die elektrischen Anschlussstellen (17) aufweisen, damit diese beim Zusammenbau der Halteeinrichtung (40) nicht beschädigt werden und beim Betrieb der Vorrichtung zugänglich sind.

24. Vorrichtung nach einem oder mehreren der Ansprüche 1 bis 23, **dadurch gekennzeichnet, dass** der Stutzen (21) auf seinem Innenumfang (23) zumindest bereichsweise konisch nach innen zulaufend ausgebildet ist.

25. Vorrichtung nach einem oder mehreren der Ansprüche 1 bis 24, **dadurch gekennzeichnet, dass** die Muffe (10) im Umfangsbereich (11) an der Außenseite (19) zumindest bereichsweise konisch ausgebildet ist, und zwar in der Weise, dass sich der Außendurchmesser der Muffe (10) in Richtung des Außenendes (14) hin verbreitert.

26. Vorrichtung nach Anspruch 25, **dadurch gekennzeichnet, dass** die Muffe (10) in ihrem konischen Bereich über mindestens ein Dichtungsmittel (13), vorzugsweise in Form eines O-Ringes, verfügt.

27. Vorrichtung nach einem oder mehreren der Ansprüche 24 bis 26, **dadurch gekennzeichnet, dass** der Winkel (32) des konischen Bereiches gegenüber der Mittelachse (51) der Muffe (10) bzw. des Stutzens (21) höchstens 7° beträgt.

28. Vorrichtung nach einem oder mehreren der Ansprüche 24 bis 27, **dadurch gekennzeichnet, dass** die Muffe (10) im Einbauzustand mit ihrem konischen Bereich in den konischen Bereich des Stutzens (21) eingreift.

29. Vorrichtung nach einem oder mehreren der Ansprüche 1 bis 28, **dadurch gekennzeichnet, dass** der Klemmring (43) an seiner anderen Seite (56) über wenigstens einen in Richtung der Mittelachse (51) weisenden Haltenocken (49) verfügt, an welchem die Gegenschulter (45) angeordnet ist,
und dass zur Herbeiführung des Einbauzustandes der Klemmring (43) über das Außenende (14) der Kunststoffmuffe (10) schiebbar ist, wobei der Klemmring (43) das Außenende (14) der Kunststoffmuffe (10) umgreift, und der Haltenocken (49) mit seiner Gegenschulter (45) mit der Schulter (42) der Kunststoffmuffe (10) in Wirkverbindung gebracht wird.

30. Vorrichtung nach einem oder mehreren der Ansprüche 1 bis 29, **dadurch gekennzeichnet, dass** der Ring (43) durch ein oder mehrere Sicherungselemente (53) gegen ungewolltes Lösen, Verschieben und / oder Verdrehen sicherbar ist.

31. Vorrichtung nach Anspruch 30, **dadurch gekennzeichnet, dass** die Sicherungselemente (53) des Ringes (43) als Sicherungsstift ausgebildet sind.

32. Vorrichtung nach Anspruch 30, **dadurch gekennzeichnet, dass** die Sicherungselemente (53) des Ringes (43) als Niet ausgebildet sind.

33. Vorrichtung nach Anspruch 30, **dadurch gekennzeichnet, dass** die Sicherungselemente (53) des Ringes (43) verschraubt werden.

34. Vorrichtung nach Anspruch 30, **dadurch gekennzeichnet, dass** als Sicherungselement (53) ein Kunststoff, Kunstharz oder Wachs dient, welches am Stirnbereich (25) des Stutzens (21) anspritzbar ist.

35. Vorrichtung nach Anspruch 30, **dadurch gekennzeichnet, dass** als Sicherungselement (53) ein Kunststoffsteg dient, der im Stirnbereich (25) des Stutzens (21) anbringbar ist, und mit dem Ring (43) in Wirkverbindung tritt.

36. Vorrichtung nach einem oder mehreren der Ansprüche 1 bis 35, **dadurch gekennzeichnet, dass** das Kunststoffrohr (30) und / oder die Muffe (10) aus Polyethylen bestehen.

37. Vorrichtung nach einem oder mehreren der Ansprüche 1 bis 36, **dadurch gekennzeichnet, dass** die Armatur (20) und / oder der Stutzen (21) aus Guss, wie beispielsweise Grauguss, Stahlguss, duktilem Guss od. dgl., bestehen.

38. Vorrichtung nach einem oder mehreren der Ansprüche 1 bis 37, **dadurch gekennzeichnet, dass** die Armatur (20) ein Absperrschieber ist.

39. Vorrichtung nach einem oder mehreren der Ansprüche 1 bis 37, **dadurch gekennzeichnet, dass** die Armatur (20) ein Ventil ist.

40. Vorrichtung nach einem oder mehreren der Ansprüche 1 bis 37, **dadurch gekennzeichnet, dass** die Armatur (20) ein Metallrohr ist.

## Claims

1. Device for establishing a transition between a metal fitting (20) and a plastic pipe (30) for flowing media,
with a metal adaptor (21) on the fitting (20) to which the plastic pipe (30) can be connected,
and with a plastic socket (10), consisting mainly of plastic, which serves to connect the plastic pipe (30), with the plastic socket (10), being weldable to the plastic pipe (30),
with at least one sealing means (13) being arranged on the circumference (11) and/or the front area (12) of the plastic socket (10),
with it being possible to fit the plastic socket (10) at least partially into the inside (22) of the metal adaptor (21) with the outer end (14) of the plastic socket (10) projecting outwards,
whereby the device furthermore has a three-part locking device (40), consisting of a stop (41) on the metal adaptor (21), a shoulder (42) on the plastic socket (10), and a locking ring (43),
with the locking ring (43) having an opposing stop (44) for the stop (41) on the metal adapter (21) and an opposing shoulder (45) for the shoulder (42) on the plastic socket (10), each of which can be brought into engagement with each other, thus producing an assembled state,
**characterized in that**
the shoulder (42) is arranged on the front (18) of the outer end (14), thus ensuring that when a tensile load (47) is applied to the plastic socket (10) in the direction of its outer end (14) no bending moment of the shoulder (42) is transmitted to the plastic socket (10).

2. Device according to Claim 1, **characterized in that** the three-part locking device (40) is provided on the inner circumference (23) of the metal adapter (21).

3. Device according to one or more of Claims 1 or 2, **characterized in that** the locking ring (43) engages the stop (41) as a type of bayonet connection.

4. Device according to one or more of Claims 1 to 3, **characterized in that** the stop (41) is formed on one or more projections (24),
with the opposing stop (45) being arranged on one or more opposing projections (50) respectively, which are correspondingly brought together.

5. Device according to Claim 4, **characterized in that** the projections(s) (24) and/or the opposing projection(s) (50) is/are formed as lugs (52).

6. Device according to one or more of Claims 1 to 5, **characterized in that** a ringlike area (26) is provided in the front area (25) of the metal adapter (21) at which the locking element (31) having the stop (41) is provided, with the locking ring (43) engaging at least partially behind the locking element (31) in the assembled state.

7. Device according to Claim 6, **characterized in that** the ringlike area (26) has two locking elements (31) which lie diametrically opposite each other.

8. Device according to Claims 6 or 7, **characterized in that** each locking element (31) is approximately the size of a quarter of the internal circumference (27) of the ringlike area (26).

9. Device according to one or more of Claims 1 to 8, **characterized in that** radially extending locking cams (49) which have the opposing stop (44) for the stop (41) on the metal adapter (21) are arranged on the outer circumference (48) of the locking ring (43).

10. Device according to Claim 9, **characterized in that** the locking ring (43) has two locking cams (49) which lie diametrically opposite each other.

11. Device according to one of Claims 9 or 10, **characterized in that** each of the locking cams (49) extends over approximately a quarter of the outer circumference (48) of the locking ring (43).

12. Device according to one or more of Claims 6 to 8 and 9 to 11, **characterized in that** during the assembly of the device, the plastic socket (10), is firstly introduced into the metal adapter (21),
and the locking ring (43) is then inserted into the ringlike area (26), with the locking cam(s) (49) of the locking ring (43) then engaging there in the ringlike area (26), where there is no locking element (31),
and the locking ring (43) then finally being rotated in the metal adapter (21), causing the locking cams (49) to engage at least partially in the locking element (31).

13. Device according to one or more of Claims 6 to 12, **characterized in that** the ringlike area (26) is designed as a single piece with the metal adapter (21).

14. Device according to one or more of Claims 1 to 13, **characterized in that** the locking ring (43) is designed to be essentially flat in the direction of the central axis (51).

15. Device according to one or more of Claims 1 to 14, **characterized in that** the one side (55) of the locking ring (43) serves as an opposing shoulder (45) for the shoulder (42) on the plastic socket (10).

16. Device according to one or more of Claims 1 to 15, **characterized in that** the socket (10) is connected to the plastic pipe (30) by a butt welding process.

17. Device according to one or more of Claims 1 to 16, **characterized in that** the sealing means (13) of the socket (10) is pressed against the adapter (21) by the assembly of the locking ring (43).

18. Device according to one or more of Claims 1 to 17, **characterized in that** the socket (10) has hot wires (15) which are located on the inner circumference (16) of the socket (10).

19. Device according to Claim 18, **characterized in that** the one end of the plastic pipe (30) is inserted into the socket (10) at least in the area of the hot wires (15),
and welding of the plastic pipe (30) to the socket (10) can take place by the heating of the hot wires (15).

20. Device according to one or more of Claims 18 or 19, **characterized in that** the socket (10) has an indicator by means of which it can be seen, including in the installed state, when sufficient heat has developed in the area of the hot wires (15) to enable a good welding of the socket (10) to the plastic pipe (30) to take place.

21. Device according to one or more of Claims 18 to 20, **characterized in that** the arrangement of the hot wires (15) on the socket (10) is bifilar.

22. Device according to one or more of Claims 18 to 21, **characterized in that** the hot wires (15) have electrical terminal points (17),
which are arranged in the outer end (14) of the socket (10) in such a way that they are not covered by the adapter (21) or the locking ring (43).

23. Device according to Claim 22, **characterized in that** the locking ring (43) and/or the end of the adapter (21) has recesses (46) for the electrical terminal points (17), so that said terminal points (17) are not damaged during the assembly of the locking device (40) and are accessible during the operation of the device.

24. Device according to one or more of Claims 1 to 23, **characterized in that** the adapter (21) is, at least partially, of an inwards-running tapered design on its inner circumference (23).

25. Device according to one or more of Claims 1 to 24, **characterized in that** the socket (10) on the outside (19) in the circumferential area (11) is, at least partially, of tapered design and in such a way that the outer diameter of the socket (10) expands in the direction of the outer end (14).

26. Device according to Claim 25, **characterized in that** the socket (10) has at least on sealing means (13), preferably in the form of an 0-ring, in its tapered area.

27. Device according to one or more of Claims 24 to 26, **characterized in that** the angle (32) of the tapered area relative to the central axis (51) of the socket (10) or of the adapter (21) is a maximum of 7⁰.

28. Device according to one or more of Claims 24 to 27, **characterized in that** the tapered area of the socket (10) engages in the tapered area of the adapter (21) in the assembled state.

29. Device according to one or more of Claims 1 to 28, **characterized in that** the locking ring (43) has, on its other end (56), at least one locking cam (49) pointing in the direction of the central axis (51), with an opposing shoulder (45) being arranged on the locking cam (49),
and during assembly the locking ring (43) can be pushed over the outer end (14) of the plastic socket (10) with the locking ring (43) engaging around the outer end (14) of the plastic socket (10) and the opposing shoulder (45) of the locking cam (49) being brought into an operative connection with the shoulder (42) of the plastic socket (10).

30. Device according to one or more of Claims 1 to 29, **characterized in that** the ring (43) can be secured by one or more locking elements (53) against unintentional loosening, shifting and/or twisting.

31. Device according to Claim 30, **characterized in that** the locking elements (53) of the ring (43) are designed as locking pins.

32. Device according to Claim 30, **characterized in that** the locking elements (53) of the ring (43) are designed as a rivet.

33. Device according to Claim 30, **characterized in that** eh locking elements (53) of the ring (43) are threaded.

34. Device according to Claim 30, **characterized in that** a plastic, synthetic resin or wax which can be sprayed on to the front (25) area of the adapter (21) is used as the locking element (53).

35. Device according to Claim 30, **characterized in that** a plastic web which can be fitted in the front (25) area of the adapter (21) and forms an operative connection to the ring (43) serves as a locking element (53).

36. Device according to one or more of Claims 1 to 35, **characterized in that** the plastic pipe (30) and/or the socket (10) is a made of polyethylene.

37. Device according to one or more of Claims 1 to 36, **characterized in that** the fitting (20) and/or the adapter (21) is made of a casting, such as grey cast iron, cast steel, ductile casting or similar.

38. Device according to one or more of Claims 1 to 37, **characterized in that** the fitting (20) is a slide valve.

39. Device according to one or more of Claims 1 to 37, **characterized in that** the fitting (20) is a valve.

40. Device according to one or more of Claims 1 to 37, **characterized in that** the fitting (20) is a metal pipe.

## Revendications

1. Dispositif pour configurer une transition entre une robinetterie (20) métallique et un tuyau (30) en plastique destiné à l'écoulement de fluides,
comprenant un embout métallique (21) contre la robinetterie (20), contre lequel il est possible de raccorder le tuyau (30) en plastique,
et comprenant un manchon (10) composé principalement de matière plastique et servant à raccorder le tuyau (30) en plastique, sachant qu'il est possible de souder ensemble le manchon (10) en plastique et le tuyau (30) en plastique,
sachant que dans la zone circonférentielle (11) et / ou frontale (12) du manchon (10) en plastique est agencé au moins un moyen d'étanchéité (13),
sachant qu'il est possible de fixer localement le manchon (10) en plastique à l'intérieur (22) de l'embout métallique (21) et que l'extrémité extérieure (14) du manchon fait saillie,
sachant que le dispositif comporte en outre un équipement de retenue (40) en trois parties, comprenant une butée (41) contre l'embout métallique (21), un épaulement (42) contre le manchon en plastique (10) ainsi qu'une bague de bridage (43),
sachant que la bague de bridage (43) dispose d'une butée antagoniste (44) affectée à la butée (41) contre l'embout métallique (21) et dispose d'un contre-épaulement (45) pour l'épaulement (42) contre le manchon (10) en plastique, pouvant respectivement être amenés en engrènement, ce qui crée un état d'incorporation,
**caractérisé en ce que**
l'épaulement (42) est agencé contre la face frontale (18) de l'extrémité extérieure (14) du manchon en plastique (10), ceci faisant que lorsque le manchon en plastique (10) subit une contrainte en traction (47) en direction de son extrémité extérieure (14) aucun couple de flexion n'est communiqué par l'épaulement (42) au manchon (10) en plastique.

2. Dispositif selon la revendication 1, **caractérisé en ce que** l'équipement de retenue (40) en trois parties est prévu contre la circonférence intérieure (23) de l'embout métallique (21).

3. Dispositif selon l'une ou plusieurs des revendications 1 ou 2, **caractérisé en ce que** la bague de bridage (43) pénètre derrière la butée (41) à la façon d'une fermeture à baïonnettes.

4. Dispositif selon l'une ou plusieurs des revendications 1 à 3, **caractérisé en ce que** la butée (41) est formée au niveau d'une ou plusieurs protubérance(s) (24),
tandis que la butée antagoniste (45) est formée au niveau de l'une ou plusieurs des protubérances antagonistes (50) qu'il est possible de rapprocher pour les mettre respectivement en correspondance.

5. Dispositif selon la revendication 4, **caractérisé en ce que** la ou les protubérance(s) (24) et la ou les protubérance(s) antagoniste(s) (50) sont configurées en forme de pattes (52).

6. Dispositif selon l'une ou plusieurs des revendications 1 à 5, **caractérisé en ce que** dans la zone frontale (25) de l'embout métallique (21) est prévue une zone (26) de type annulaire contre laquelle sont prévus des éléments de retenue (31) présentant la butée (41) et dont certaines zones sont pénétrés lorsque la bague de bridage (43) se trouve à l'état incorporé.

7. Dispositif selon la revendication 6, **caractérisé en ce que** la zone (26) de type annulaire présente deux éléments de retenue (31) se faisant diamétralement face.

8. Dispositif selon la revendication 6 ou 7, **caractérisé en ce que** chaque élément de retenue (31) a approximativement la taille d'un quart de la circonférence intérieure (27) de la zone (26) de type annulaire.

9. Dispositif selon l'une ou plusieurs des revendications 1 à 8, **caractérisé en ce que** sur la circonférence extérieure (48) de la bague de bridage (43) sont prévues des cames de retenue (49) s'étendant radialement, qui présentent la butée antagoniste (44) de la butée (41) située contre l'embout métallique (21).

10. Dispositif selon la revendication 9, **caractérisé en ce que** la bague de bridage (43) présente deux cames de retenue (49) se faisant diamétralement face.

11. Dispositif selon l'une des revendications 9 ou 10, **caractérisé en ce que** chacune des cames de retenue (49) s'étend approximativement sur un quart de la circonférence extérieure (48) de la bague de bridage (43).

12. Dispositif selon l'une ou plusieurs des revendications 6 à 8 et 9 à 11, **caractérisé en ce que** pour instaurer l'état d'incorporation du dispositif, l'on introduit d'abord le manchon (10) en plastique dans l'embout métallique (21),
l'on introduit ensuite la bague de bridage (43) dans la zone (26) de type annulaire, sachant que le cas échéant la ou les came(s) de retenue (49) de la bague de bridage (43) engrènent dans la zone de type annulaire (26), là où ne se trouvent pas d'éléments de retenue (31).
et l'on tourne enfin la bague de bridage (43) dans l'embout métallique (21), ceci faisant que les cames de retenue (49) pénètrent au moins derrière certaines parties des éléments de retenue (31).

13. Dispositif selon l'une ou plusieurs des revendications 6 à 12, **caractérisé en ce que** la zone de type annulaire (26) est exécutée monobloc avec l'embout métallique (21).

14. Dispositif selon l'une ou plusieurs des revendications 1 à 13, **caractérisé en ce que** la bague de bridage (43) présente une géométrie essentiellement plate lorsque observée en direction de l'axe médian (51).

15. Dispositif selon l'une ou plusieurs des revendications 1 à 14, **caractérisé en ce qu'**un côté (55) de la bague de bridage (43) sert de contre-épaulement (45) à l'épaulement (42) situé contre le manchon (10) en plastique.

16. Dispositif selon l'une ou plusieurs des revendications 1 à 15, **caractérisé en ce que** le manchon (10) est relié au tuyau (30) en plastique au moyen d'un procédé de soudage bout à bout.

17. Dispositif selon l'une ou plusieurs des revendications 1 à 16, **caractérisé en ce que** le montage de la bague de bridage (43) comprime les moyens d'étanchéité (13) du manchon (10) contre l'embout (21).

18. Dispositif selon l'une ou plusieurs des revendications 1 à 17, **caractérisé en ce que** le manchon (10) contient des fils chauffants (15) qui se trouvent contre la circonférence intérieure (16) du manchon (10).

19. Dispositif selon la revendication 18, **caractérisé en ce qu'**une extrémité du tuyau (30) en plastique est introduite dans le manchon (10) au moins dans la zone des fils chauffants (15),
et **en ce que** l'échauffement des fils chauffants (15) provoque le soudage du tuyau en plastique (30) avec le manchon (10).

20. Dispositif selon l'une ou plusieurs des revendications 18 ou 19, **caractérisé en ce que** le manchon (10) comporte un indicateur signalant, aussi dans l'état incorporé,
quand il s'est dégagé suffisamment de chaleur dans la zone des fils chauffants (15) pour provoquer un bon soudage du manchon (10) avec le tuyau en plastique.

21. Dispositif selon l'une ou plusieurs des revendications 18 à 20, **caractérisé en ce que** les fils chauffants (15) sont agencés bifilaires contre le manchon (10).

22. Dispositif selon l'une ou plusieurs des revendications 18 à 21, **caractérisé en ce que** les fils chauffants (15) disposent de points de raccordement (17) électriques,
lesquels sont agencés dans la zone de l'extrémité extérieure (14) du manchon (10) de sorte à ne pas être masqués par l'embout (21) ou la bague de bridage (43).

23. Dispositif selon la revendication 22, **caractérisé en ce que** la bague de bridage (43) et / ou l'extrémité du manchon (21) présente des évidements (46) destinés aux points de raccordement (17) électrique, afin que ces derniers ne soient pas endommagés pendant l'assemblage du dispositif de retenue (40) et qu'ils soient accessible pendant l'exploitation du dispositif.

24. Dispositif selon l'une ou plusieurs des revendications 1 à 23, **caractérisé en ce que** la circonférence intérieure (23) de l'embout (21) est, au moins localement, de forme conique se refermant vers l'intérieur.

25. Dispositif selon l'une ou plusieurs des revendications 1 à 24, **caractérisé en ce que** la zone circonférentielle (11) du manchon (10) présente du côté extérieur (19) une géométrie conique au moins localement, de telle sorte que le diamètre extérieur du manchon (10) observé en direction de l'extrémité extérieure (14) va en s'élargissant.

26. Dispositif selon la revendication 25, **caractérisé en ce que** le manchon (10) dispose, dans sa zone conique, d'au moins un moyen d'étanchéité (13), de préférence en forme d'un joint torique.

27. Dispositif selon l'une ou plusieurs des revendications 24 à 26, **caractérisé en ce que** l'angle (32) de la zone conique par rapport à l'axe médian (51) du manchon (10) et de l'embout (21) fait 7° maximum.

28. Dispositif selon l'une ou plusieurs des revendications 24 à 27, **caractérisé en ce que** la zone conique du manchon (10) pénètre, à l'état incorporé, dans la zone conique de l'embout (21).

29. Dispositif selon l'une ou plusieurs des revendications 1 à 28, **caractérisé en ce que** l'autre côté (56) de la bague de bridage (43) dispose au moins d'une came de retenue (49) regardant en direction de l'axe médian (51), came contre laquelle est agencé le contre-épaulement (45),
et **en ce que** pour instaurer l'état incorporé il est possible de faire coulisser la bague de bridage (43) sur l'extrémité extérieure (14) du manchon (10) en plastique, sachant que la bague de bridage (43) enserre l'extrémité extérieure (14) du manchon (10) en plastique et **en ce que** le contre-épaulement (45) de la came de retenue (49) est amené en jonction opérante avec l'épaulement (42) du manchon (10) en plastique.

30. Dispositif selon l'une ou plusieurs des revendications 1 à 29, **caractérisé en ce que** la bague (43) est sécurisable par un ou plusieurs élément(s) de blocage (53) pour empêcher un desserrage, un déplacement et/ou une rotation involontaires.

31. Dispositif selon la revendication 30, **caractérisé en ce que** les éléments de blocage (53) de la bague (43) présentent la géométrie d'une tige.

32. Dispositif selon la revendication 30, **caractérisé en ce que** les éléments de blocage (53) de la bague (43) présentent la géométrie d'un rivet.

33. Dispositif selon la revendication 30, **caractérisé en ce que** les éléments de blocage (53) de la bague (43) se vissent.

34. Dispositif selon la revendication 30, **caractérisé en ce qu'**une matière plastique, une résine artificielle ou de la cire injectable contre la zone frontale (25) de l'embout (21) sert d'élément de blocage (53).

35. Dispositif selon la revendication 30, **caractérisé en ce que** sert d'élément de blocage (53) une nervure en plastique fixable dans la zone frontale (25) de l'embout (21) et qui forme une jonction opérante avec la bague (43).

36. Dispositif selon l'une ou plusieurs des revendications 1 à 35, **caractérisé en ce que** le tuyau en plastique (30) et / ou le manchon (10) sont en polyéthylène.

37. Dispositif selon l'une ou plusieurs des revendications 1 à 36, **caractérisé en ce que** la robinetterie (20) et / ou le manchon (21) sont en fonte telle que par exemple en fonte grise, acier moulé, fonte ductile ou assimilée.

38. Dispositif selon l'une ou plusieurs des revendications 1 à 37, **caractérisé en ce que** la robinetterie (20) est un tiroir de fermeture.

39. Dispositif selon l'une ou plusieurs des revendications 1 à 37, **caractérisé en ce que** la robinetterie (20) est une vanne.

40. Dispositif selon l'une ou plusieurs des revendications 1 à 37, **caractérisé en ce que** la robinetterie (20) est un tuyau métallique.
